# EUROPEAN PATENT APPLICATION

(11) **EP 4 593 131 A1**
(43) Date of publication of application: **30.07.2025**
(21) Application number: 23954985.0
(22) Date of filing: 27.11.2023
(51) Int. Cl.: H01M 10/04

(54) **PRESSURIZING DEVICE, BATTERY PRODUCTION LINE AND PRESSURIZING METHOD**

(30) Priority: 11.10.2023 CN 202311310344
(71) Applicant: Contemporary Amperex Technology (Hong Kong) Limited, Central (HK)
(72) Inventor: WU, Kai, Ningde, Fujian 352100 (CN); CAO, Xin, Ningde, Fujian 352100 (CN); YANG, Jun, Ningde, Fujian 352100 (CN)
(74) Representative: Kraus & Lederer PartGmbB
(86) International application number: PCT/CN2023/134486
(87) International publication number: WO 2025/076939

(57) **Abstract**

This disclosure discloses a pressing apparatus, a battery production line, and a pressing method. The pressing apparatus is configured to press a workpiece queue. The pressing apparatus includes: a placement table, configured to support the workpiece queue, where the workpiece queue includes a plurality of workpieces arranged along a first direction; and at least one pressing assembly, where each pressing assembly includes a first presser and a stopper arranged opposite the first presser, where the first presser is configured to apply an acting force along the first direction to the workpiece queue, the stopper is configured to block the workpiece queue, and the first presser and the stopper are constructed to be capable of moving towards or away from each other along the first direction, where the pressing assembly is constructed to be capable of moving along a second direction intersecting the first direction. The pressing apparatus, battery production line, and pressing method in this disclosure feature high compatibility and high level of automation, helping improve the production efficiency.

## Description

### CROSS-REFERENCE TO RELATED APPLICATIONS

This disclosure is proposed based on and claims priority to Chinese Patent Application No. 202311310344.8, filed on October 11, 2023 and entitled "PRESSING APPARATUS, BATTERY PRODUCTION LINE, AND PRESSING METHOD", which is incorporated herein by reference in its entirety.

### TECHNICAL FIELD

This disclosure relates to the field of battery production technologies, and in particular to, a pressing apparatus, a battery production line, and a pressing method.

### BACKGROUND

New energy batteries are widely used in our life and industries. For example, new energy vehicles equipped with batteries have been extensively used. In addition, batteries are increasingly applied in the field of energy storage.

During the production and manufacturing of batteries, particularly in the process of grouping battery cells, it is common to perform a pressing operation on a battery cell queue. Sometimes, to manufacture battery modules of varied specifications, different pressing schemes need to be employed in the pressing process. In addition, the industry is demanding ever greater flexibility in battery production lines. Therefore, how to accommodate battery cell queues of different specifications in a single battery production line has become one of the research topics in the industry.

### SUMMARY

To solve this technical problem, one intention of this disclosure is to provide a pressing apparatus, a battery production line, and a pressing method, so that battery queues can be pressed rapidly in an automated manner and high compatibility is achieved.

This disclosure is implemented using the following technical solutions.

A first aspect of this disclosure provides a pressing apparatus for pressing a workpiece queue. The pressing apparatus includes: a placement table, configured to support the workpiece queue, where the workpiece queue includes a plurality of workpieces arranged along a first direction; and at least one pressing assembly, where each pressing assembly includes a first presser and a stopper arranged opposite the first presser, where the first presser is configured to apply an acting force along the first direction to the workpiece queue, the stopper is configured to block the workpiece queue, and the first presser and the stopper are constructed to be capable of moving towards or away from each other along the first direction, where the pressing assembly is constructed to be capable of moving along a second direction intersecting the first direction.

The pressing assembly can move along the second direction intersecting the first direction. Therefore, positions of the first presser and the stopper in the second direction can be automatically adjusted for the workpiece queues of different specifications. In this way, a pressing operation can be performed on the workpiece queues of different specifications. This improves the compatibility of the pressing apparatus, facilitating flexible production and improving the production efficiency.

In addition, the pressing apparatus itself can adopt different pressing schemes for pressing the workpiece queues of different specifications, without change of accessories. Therefore, the pressing apparatus can perform the pressing operation uninterruptedly, without a suspension for replacing accessories to accommodate the workpiece queues of different specifications. This improves the production efficiency and reduces the production cost on accessories of varied specifications and the space occupied by them.

In some embodiments, the pressing apparatus includes a fixed frame and at least one movable frame disposed on the fixed frame and capable of moving along the second direction, where each pressing assembly is disposed on each movable frame.

In this case, the movable frame can quickly bring the first presser and the stopper to a position corresponding to the workpiece queue, simplifying the structure and motion control.

In some embodiments, each movable frame is provided with a stopper bracket and a moving frame capable of reciprocating relative to the movable frame along the first direction, the stopper is mounted on the stopper bracket, and the first presser is mounted on the moving frame and is capable of moving under a driving action of the moving frame.

Therefore, the first presser and the stopper can be mounted on the movable frame. In addition, a simple structure can be used to enable the first presser to move towards or away from the stopper so as to apply or withdraw pressure.

In some embodiments, the pressing assembly includes a first pressing assembly and a second pressing assembly, where the movable frame includes a first movable frame and a second movable frame, the first pressing assembly is disposed on the first movable frame and constructed to be capable of moving along the second direction under a driving action of the first movable frame, and the second pressing assembly is disposed on the second movable frame and constructed to be capable of moving along the second direction under a driving action of the second movable frame.

Two pressing assemblies are provided, and the two pressing assemblies can be made to operate simultaneously to press a double-row workpiece queue. This improves the machining efficiency of the pressing link, thereby improving the production efficiency of the entire production line.

In some embodiments, the first pressing assembly and the second pressing assembly are constructed to be capable of switching between a first pressing mode and a second pressing mode, in the first pressing mode, one of the first pressing assembly and the second pressing assembly performs a pressing operation, in the second pressing mode, both the first pressing assembly and the second pressing assembly perform a pressing operation, and the pressing operation is performed by the first presser of each pressing assembly moving towards the stopper along the first direction.

In this way, the pressing apparatus can press two workpiece queues at the same time, further improving the production efficiency and reducing the production cost. Moreover, the pressing apparatus is designed with two pressing modes and can switch between the two pressing modes, so that the pressing apparatus can press both the single-row workpiece queue and double-row workpiece queue. This further improves the compatibility of the pressing apparatus.

In some embodiments, the pressing apparatus further includes a controller, where the controller is configured to control the first pressing assembly and the second pressing assembly to perform the pressing operation in the first pressing mode or the second pressing mode, based on preset information about an arrangement type of the workpiece queue.

In this way, the pressing apparatus can automatically switch between the pressing modes based on different situations, so that workpiece queues can be pressed using different pressing schemes based on their arrangement types. This increases the level of automation of the pressing apparatus. In addition, the pressing apparatus can press the workpiece queues uninterruptedly even if they are arranged in different types, thereby improving the production efficiency.

In some embodiments, the first presser is provided with a presser head for pushing the workpieces, and the stopper is provided with an abutting surface for abutting against the workpieces.

In this way, the workpiece queue can directly or indirectly abut against the abutting surface of the stopper, and then the workpiece queue can be pressed under the pushing force of the presser head. Moreover, that pressing is performed by the presser head can adapt to the pressed surfaces of workpiece queues of different specifications or the pressed surface of the tray holding the workpiece queues. In addition, the abutting surface allows pressure to be distributed uniformly on the workpiece queue.

In some embodiments, the pressing apparatus further includes a second presser, where the second presser is configured to apply an acting force along a third direction to the workpiece queue, and the second presser is disposed on the first movable frame and/or the second movable frame in a manner of being capable of reciprocating along the third direction, where the third direction intersects both the first direction and the second direction.

In this way, the pressing apparatus can also press a top surface of the workpiece queue, so that the workpiece queue can also be pressed in the height direction, guaranteeing the dimensional accuracy of the workpiece queue in the third direction.

In some embodiments, the second presser is disposed on the first movable frame or the second movable frame through a moving carriage, where the moving carriage includes a third-direction guide rail extending along the third direction, and the second presser is capable of moving along the third-direction guide rail.

In this way, a simple and stable structure can be used to enable the second presser to move along the third direction.

In some embodiments, the moving carriage is capable of moving along the first direction, and the moving carriage further includes at least one moving-carriage slider capable of sliding along the first direction, and the second presser includes at least one pressing plate, where the at least one pressing plate is capable of moving along with the moving-carriage slider.

In this way, the second presser can move along the first direction to an appropriate position and press the workpiece queues of different specifications along the third direction. This further improves the compatibility and flexibility of the pressing apparatus. In addition, the second presser includes at least one pressing plate, and the at least one pressing plate can move along with the moving-carriage slider. Therefore, when a plurality of pressing plates are provided, the spacing between the plurality of pressing plates can be adjusted to accommodate more specifications of workpiece queues.

In some embodiments, the intersecting includes perpendicular intersecting.

In this case, the workpiece queue can be pressed in the perpendicular direction, which is particularly suitable for pressing workpiece queues in the shape of a cuboid.

In some embodiments, the placement table is provided with a lifting mechanism for raising and lowering a tray carried by the placement table, and the tray is configured for holding the workpiece queue.

In this way, a tray can disengage from a tray conveyor line by using the lifting mechanism, so that the tray can be easily aligned and positioned.

In some embodiments, a blocking apparatus is disposed on a side of the placement table in the first direction, and the blocking apparatus is configured to block the tray.

In this way, a tray can be easily stopped on the placement table.

In some embodiments, each pressing assembly further includes a sleeve, and the sleeve is disposed at a position allowing an opening of the sleeve to be fitted over a tray lead screw, where the tray lead screw is provided in the tray carried by the placement table and extends from an end of the tray along the first direction.

In this way, the tray and the pressing apparatus can be permanently connected using the tray lead screw and sleeve, so as to prevent the movement of the tray during pressing and facilitate the pressing of the workpiece queue. This improves the stability and reliability of the pressing operation.

A second aspect of this disclosure provides a battery production line. The battery production line includes a tray conveyor line and the pressing apparatus according to the first aspect of this disclosure. The tray conveyor line places trays on the placement table or removes trays from the placement table, and the first presser of the pressing apparatus moves towards the stopper along the first direction to perform a pressing operation on a battery queue carried by the tray on the placement table.

In this way, workpiece queues can be pressed rapidly in an automated manner, improving the pressing efficiency. In addition, the workpiece queues of varied specifications, for example, single-row workpiece queues and double-row workpiece queues, can be pressed in different pressing modes, improving the compatibility. Moreover, this also improves the flexible production of the battery production line.

In some embodiments, the workpiece includes at least one of a battery and a battery unit formed by combining at least two batteries, and the workpiece queue includes at least one of a battery queue formed by arranging a single row of batteries and a battery unit queue formed by arranging the battery units.

In this way, battery pressing is supported. In addition, battery queues of varied specifications can be accommodated, for example, a single-row battery queue formed by arranging single rows of batteries and a double-row battery queue formed by arranging double rows of batteries. This improves the compatibility (flexibility) of the pressing apparatus and even the entire battery production line, and also improves the efficiency of grouping batteries.

A third aspect of this disclosure provides a pressing method, where a pressing apparatus is configured to press a workpiece queue. The pressing apparatus includes a placement table and at least one pressing assembly, each pressing assembly includes a first presser and a stopper arranged opposite the first presser, and each pressing assembly is constructed to be capable of moving along a second direction intersecting a first direction. The pressing method includes: a placing step of placing a tray carrying the workpiece queue on the placement table and bringing the tray to a predetermined position, where the workpiece queue includes a plurality of workpieces arranged in the first direction, and the tray includes a first vertical plate and a second vertical plate for limiting positions of two ends of the workpiece queue in the first direction; a positioning step of moving at least one pressing assembly along the second direction to a preparatory pressing position, where each pressing assembly includes the first presser and the stopper, and at the preparatory pressing position, each workpiece queue is located between the first presser and the stopper of the each pressing assembly; and a pressing step of moving the first presser towards the stopper along the first direction to perform a pressing operation on the workpiece queue until the workpiece queue reaches a predetermined length.

In this way, the pressing apparatus can press the workpiece queues automatically and efficiently. In addition, workpiece queues in different sizes are accommodated, presenting good compatibility.

In some embodiments, before the positioning step, the pressing method further includes: a reading step of reading information about the workpiece queue; and determining whether the tray contains the workpiece queue, and if the tray does not contain the workpiece queue, removing the tray from the placement table, or if the tray contains the workpiece queue, proceeding to a type determining step.

In this way, whether a tray contains a workpiece queue and information about the workpiece queue can be quickly determined, so that the workpiece queue can be pressed correctly, reducing the risk of misoperation.

In some embodiments, the pressing assembly includes a first pressing assembly and a second pressing assembly. The first pressing assembly and the second pressing assembly are constructed to be capable of switching between a first pressing mode and a second pressing mode, in the first pressing mode, one of the first pressing assembly and the second pressing assembly performs a pressing operation, in the second pressing mode, both the first pressing assembly and the second pressing assembly perform a pressing operation, and in the type determining step, an arrangement type of the workpiece queue is determined based on the read information about the workpiece queue, where the arrangement type is used for determining that the pressing operation is performed in the first pressing mode or the second pressing mode.

In this way, after the arrangement type of the workpiece queue is determined, a pressing mode matching the arrangement type can be selected to accommodate the single-row workpiece queue and double-row workpiece queue. In addition, the pressing mode can be switched automatically, helping improve the production efficiency.

In some embodiments, the pressing apparatus further includes a second presser configured to apply an acting force along a third direction to the workpiece queue, and after the positioning step and before the pressing step, the pressing method further includes: a down-pressing step of moving the second presser along the third direction to press down on the workpiece queue.

This can further improve the dimensional accuracy of the workpiece queue in the third direction.

In some embodiments, the placing step includes: blocking, using a blocking apparatus, the tray moving along the first direction to place the tray on the placement table; and raising the placement table using a lifting mechanism of the placement table, so that the placement table disengages from a tray conveyor line that transports the tray, whereby the tray is brought to the predetermined position.

In this way, the tray can be placed in the expected position, and aligned and positioned without being affected by the tray conveyor line. In addition, the tray conveyor line cannot be easily damaged.

In some embodiments, the positioning step includes: moving the pressing assembly along the second direction to position each workpiece queue between the first presser and the stopper of each pressing assembly based on the arrangement type, where if the arrangement type is a double-row workpiece queue, one of the first pressing assembly and the second pressing assembly is moved along the second direction, and if the arrangement type is a single-row workpiece queue, both the first pressing assembly and the second pressing assembly are moved along the second direction; bringing the first vertical plate of the tray into contact with the stopper, and positioning the tray by having a sleeve of the pressing assembly fitted over a tray lead screw, where the tray lead screw is disposed in the tray and extends from an end of the tray along the first direction; and moving the first presser, which has moved to a position corresponding to the workpiece queue, along the first direction to the vicinity of the second vertical plate of the tray.

In this way, one or both of the first pressing assembly and the second pressing assembly can be made to operate based on the arrangement type of the workpiece queue, so that the pressing operation can be performed automatically. In addition, through the cooperation between the sleeve and the tray lead screw, the tray can be fixed at the preparatory pressing position, so as to stably maintain the workpiece queue at an appropriate position.

In some embodiments, the pressing step includes: moving the first presser towards the stopper along the first direction to perform a pressing operation on the workpiece queue based on the arrangement type, where if the arrangement type is a double-row workpiece queue, the first presser of one of the first pressing assembly and the second pressing assembly performs the pressing operation, and if the arrangement type is a single-row workpiece queue, the first pressers of both the first pressing assembly and the second pressing assembly perform the pressing operation; and determining whether each pressed workpiece queue has the predetermined length; and if every workpiece queue has the predetermined length, proceeding to a locking step, if any workpiece queue is longer than the predetermined length, making the first presser corresponding to that workpiece queue continue pressing until the workpiece queue reaches the predetermined length, and if any workpiece queue is shorter than the predetermined length, determining that the workpiece queue is unqualified under pressing criteria; where in the locking step, the sleeve fitted over the tray lead screw is rotated to be locked, thereby preventing the second vertical plate from moving away from the first vertical plate along the first direction, so as to maintain the workpiece queue at the predetermined length.

In this way, pressing can be performed based on the arrangement type of the workpiece queue, so as to support pressing of both single-row workpiece queues and double-row workpiece queues. In addition, the length of a workpiece queue is checked after a pressing operation. Therefore, whether appropriate pressing is performed can be learned in a timely manner. Then, supplementary pressing is performed or the workpiece queue is considered unqualified under pressing criteria, based on actual situations. In addition, the locking step can maintain the pressed workpiece queue at a predetermined length, facilitating subsequent processes.

Beneficial effects of the embodiments of this disclosure are as follows:

This disclosure provides a pressing apparatus, a battery production line, and a pressing method, so that battery queues can be pressed rapidly in an automated manner and high compatibility is achieved.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the purposes of the preferred implementations, and should not be construed as a limitation on this disclosure. Moreover, throughout the accompanying drawings, the same reference signs represent the same parts. In the accompanying drawings:
FIG. 1 is a schematic diagram of a three-dimensional structure of a pressing apparatus according to some embodiments of this disclosure;
FIG. 2 is a schematic plan view of a pressing apparatus according to some embodiments of this disclosure;
FIG. 3 is a schematic plan view of a pressing apparatus carrying a tray and a workpiece queue according to some embodiments of this disclosure;
FIG. 4 is a cross-sectional view of FIG. 3 in the A-A direction;
FIG. 5 is an enlarged view of part B circled in FIG. 4;
FIG. 6 is a first schematic diagram of a three-dimensional structure of a movable frame according to some embodiments of this disclosure;
FIG. 7 is a second schematic diagram of a three-dimensional structure of a movable frame according to some embodiments of this disclosure;
FIG. 8 is a third schematic diagram of a three-dimensional structure of a movable frame according to some embodiments of this disclosure;
FIG. 9 is an enlarged view of part C circled in FIG. 8;
FIG. 10 is a fourth schematic diagram of a three-dimensional structure of a movable frame according to some embodiments of this disclosure;
FIG. 11 is an enlarged view of part D circled in FIG. 10;
FIG. 12 is a schematic plan view of a single-row workpiece queue capable of being pressed by a pressing apparatus according to some embodiments of this disclosure;
FIG. 13 is a schematic plan view of a double-row workpiece queue capable of being pressed by a pressing apparatus according to some embodiments of this disclosure;
FIG. 14 is a schematic flowchart of a pressing method according to some embodiments of this disclosure;
FIG. 15 is another schematic flowchart of a pressing method according to some embodiments of this disclosure;
FIG. 16 is yet another schematic flowchart of a pressing method according to some embodiments of this disclosure;
FIG. 17 is a schematic flowchart of a placing step according to some embodiments of this disclosure;
FIG. 18 is a schematic flowchart of a positioning step according to some embodiments of this disclosure; and
FIG. 19 is a schematic flowchart of a pressing step according to some embodiments of this disclosure.

### Reference signs

100: pressing apparatus; 101: placement table; 102: lifting mechanism; 1021: lifting plate; 1022: lifting apparatus; 103: blocking apparatus; 104: universal ball; 105: positioning apparatus; 106: gripper; 200: workpiece queue; 300: tray; 301: tray lead screw; 302: first vertical plate; 303: second vertical plate; 400: tray conveyor line; 110: pressing assembly; 113: first presser; 1131: presser head; 114: stopper; 1141: abutting surface; 115: sleeve; 120: fixed frame; 121: first traverse beam; 122: second traverse beam; 1221: traverse guide rail; 1222: blocking piece; 123: longitudinal beam; 130: movable frame; 1301: meshing part; 1302: first drive apparatus; 1303: lead screw; 1304: second drive apparatus; 1305: movable-frame guide rail; 1306: first slider; 131: first movable frame; 132: second movable frame; 140: stopper bracket; 1401: stopper slide rail; 1402: stopper slide frame; 1403: stopper side baffle; 150: moving frame; 1501: moving frame connecting plate; 1502: nut; 1503: first-presser side baffle; 160: second presser; 161: moving carriage; 162: third-direction guide rail; 163: presser connecting plate; 1631: second slider; 1632: third slider; 164: moving-carriage slider; 165: pressing plate; and 166: carriage slide rail.

### DESCRIPTION OF EMBODIMENTS

The following describes in detail the embodiments of technical solutions of this disclosure with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used herein shall have the same meanings as commonly understood by those skilled in the art to which this disclosure belongs. The terms used herein are intended to merely describe the specific embodiments rather than to limit this disclosure. The terms "include" and "have" and any other variations thereof in this disclosure are intended to cover non-exclusive inclusions.

In the description of the embodiments of this disclosure, the terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this disclosure, "a plurality of" means at least two unless otherwise specifically stated.

In this specification, reference to "embodiment" means that specific features, structures or characteristics described with reference to the embodiment may be incorporated in at least one embodiment of this disclosure. The word "embodiment" appearing in various places in the specification does not necessarily refer to the same embodiment, or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates "or" relationship between contextually associated objects.

In the description of the embodiments of this disclosure, the orientations or positional relationships indicated by the technical terms "length", "width", "thickness", "upper", "lower", "front", "rear", "left", "right", "vertical", "horizontal", "top", "bottom", "inside", "outside", and the like are based on the orientations or positional relationships as shown in the accompanying drawings. These terms are merely for ease and brevity of description of the embodiments of this disclosure rather than indicating or implying that the means or components mentioned must have specific orientations or must be constructed, manipulated, or used according to specific orientations, and therefore shall not be construed as any limitations on embodiments of this disclosure.

In the description of the embodiments of this disclosure, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this disclosure as appropriate to specific situations.

In the description of the embodiments of this disclosure, unless otherwise specified and defined explicitly, the technical term "contact" should be understood in its general sense, which may be direct contact, contact via an intermediate medium layer, contact with no acting force on each other, or contact with an acting force on each other.

The following describes in detail this disclosure.

At present, new energy batteries are used more extensively in our life and industries. They have been widely used in energy storage power supply systems such as hydroelectric power plants, thermal power plants, wind power plants, and solar power plants, as well as in many other fields including electric transportation tools such as electric bicycles, electric motorcycles, and electric vehicles, and aerospace. With continuous expansion of application fields of traction batteries, market demands for the traction batteries are also expanding.

During the production and manufacturing process of products such as batteries, grouped battery cell queues or battery unit queues need to be pressed to obtain a battery module with higher fastness and desired flatness. This facilitates subsequent operations on the battery queues or battery unit queues such as binding and attachment of a heat exchange plate, and reduces the complexity of processing devices. Moreover, pressing the battery queues or battery unit queues helps improve the compactness of the battery module, thereby improving the volume utilization of batteries.

To meet diversified product needs, battery manufacturers usually need to manufacture battery products of varied specifications. Therefore, batteries are grouped in different forms and specifications, for example, battery cells in a single row are arranged into a group (sometimes also referred to as a "single-row module"), or two or more battery cells are bonded to form a battery unit and a plurality of battery units are arranged into a group (sometimes also referred to as a "double-row module" and "multi-row module"). However, existing apparatuses for pressing battery queues or battery unit queues can generally handle only one arrangement form of the foregoing single-row module, double-row module, and multi-row module, or can press the battery queues or battery unit queues in only one specification. If it is required to press battery modules in different arrangement forms or specifications, the pressing apparatus and even the production line needs to be stopped for replacing accessories, resetting machining parameters, and the like. This is time-consuming, and is detrimental to improvement in the automation level of production and production efficiency. Moreover, manufacturing tools and accessories need to be prepared for adapting to battery modules in varied arrangement forms and specifications. This requires a large space on the production line for storing these tools and accessories, which is not conducive to lowering production costs.

In view of the foregoing problems in the related art, this disclosure proposes a pressing apparatus. The pressing apparatus is configured to press a workpiece queue, and includes a placement table and at least one pressing assembly. The placement table is configured to support the workpiece queue, where the workpiece queue includes a plurality of workpieces arranged along a first direction. Each pressing assembly includes a first presser and a stopper arranged opposite the first presser, where the first presser is configured to apply an acting force along the first direction to the workpiece queue, the stopper is configured to block the workpiece queue, and the first presser and the stopper are constructed to be capable of moving towards or away from each other along the first direction, where the pressing assembly is constructed to be capable of moving along a second direction intersecting the first direction.

The pressing apparatus according to this embodiment of this disclosure can rapidly press workpiece queues in an automated manner, reducing labor costs and improving the pressing efficiency. In addition, the pressing assembly moves along the second direction, and positions of the first presser and the stopper in the second direction can be automatically adjusted for the workpiece queues of different specifications. In this way, a pressing operation can be performed on the workpiece queues of different sizes or specifications without a suspension. This improves the compatibility of the pressing apparatus, facilitating flexible production and improving the production efficiency.

The pressing apparatus according to this embodiment of this disclosure can be used in the battery production process, for example, for pressing battery cell queues or battery unit queues. Certainly, those skilled in the art should understand that the pressing apparatus provided in this embodiment of this disclosure is configured to press not only workpieces during the battery production and manufacturing process, but also any other workpiece queues that need to be pressed.

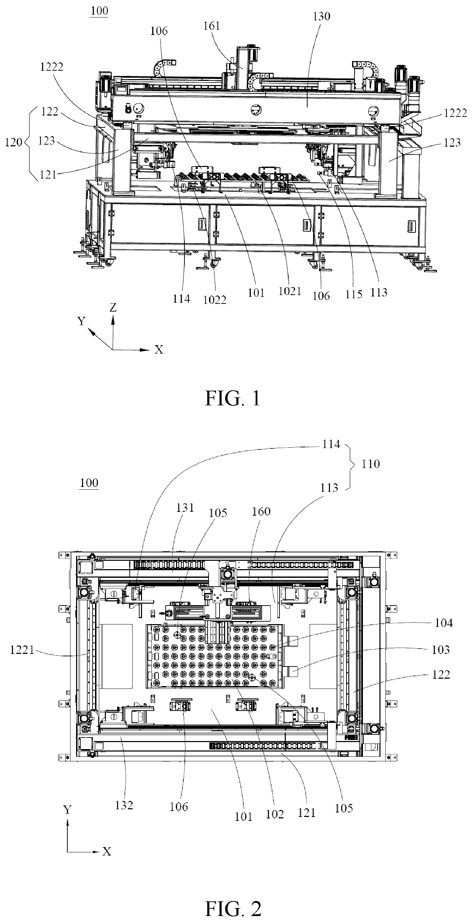

Some embodiments of this disclosure are described in detail, with reference to FIG. 1 to FIG. 19.

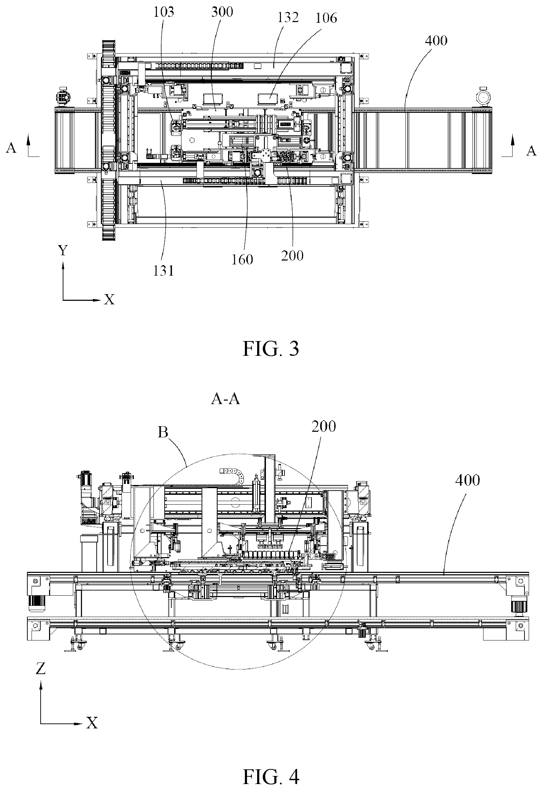

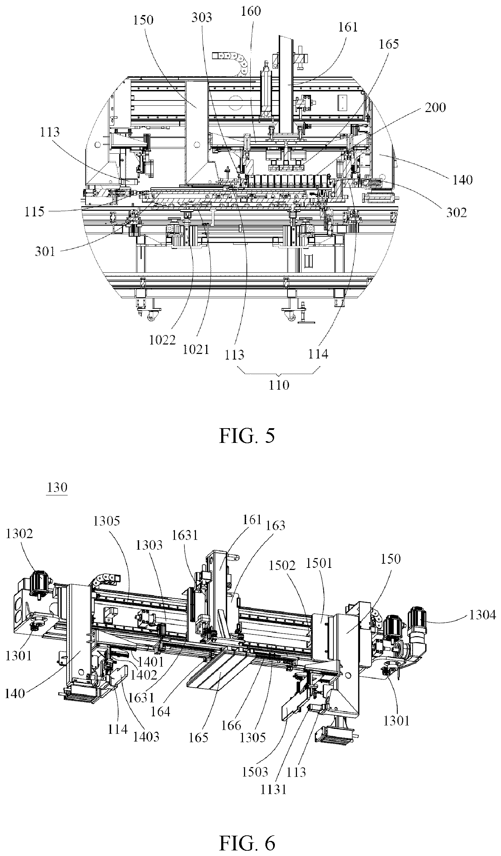

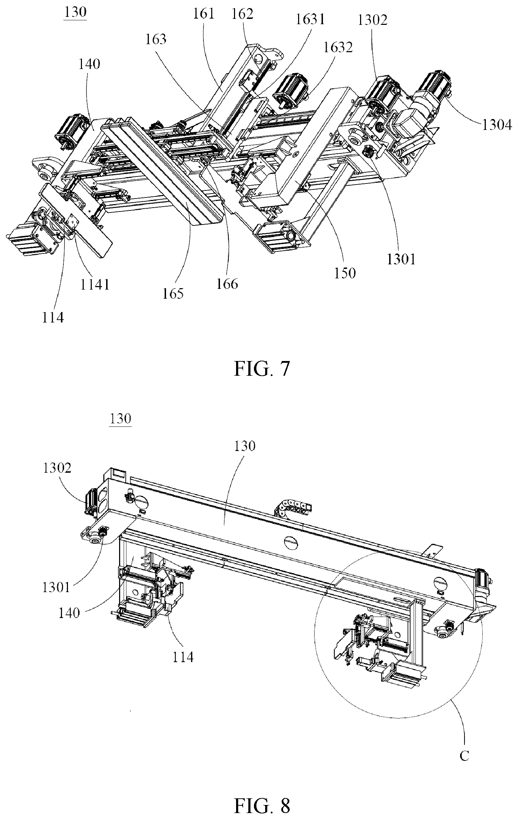

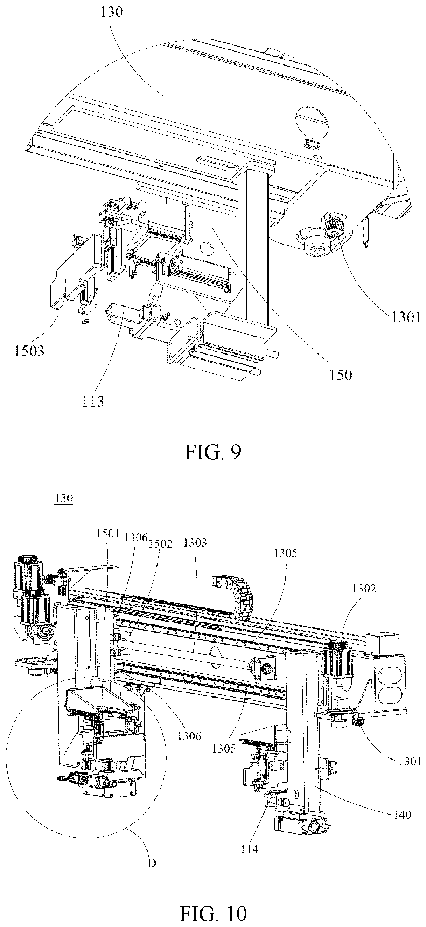

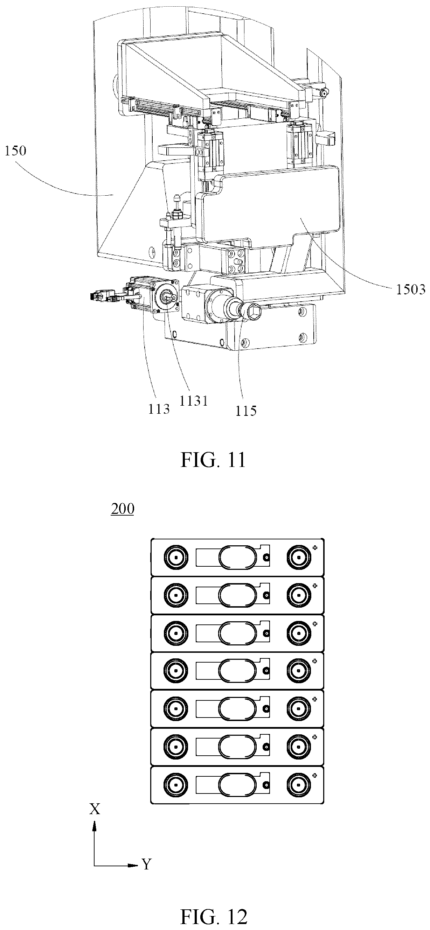

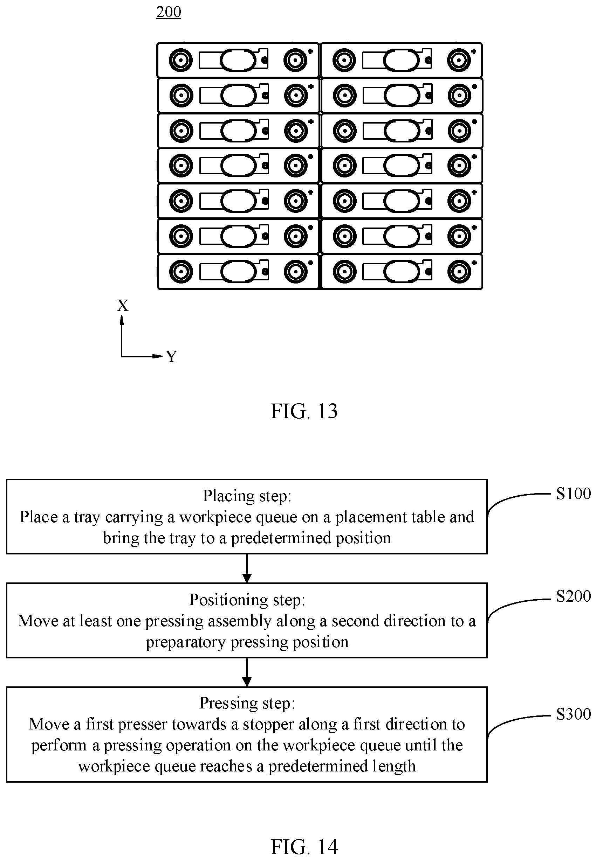

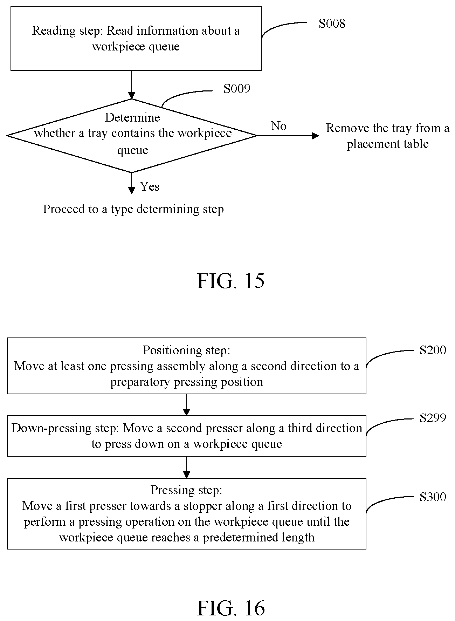

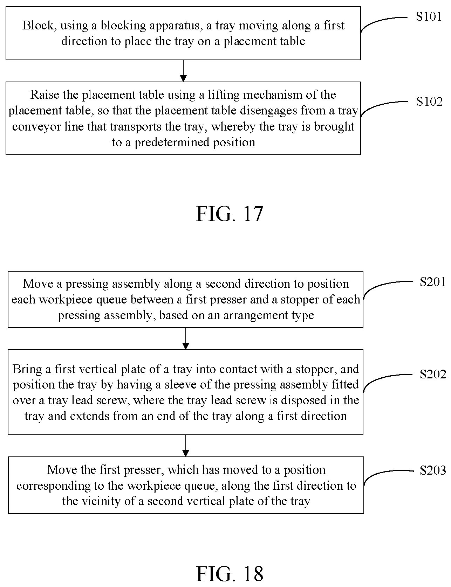

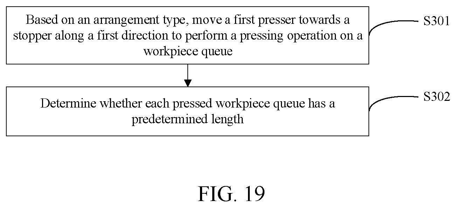

FIG. 1 is a schematic diagram of a three-dimensional structure of a pressing apparatus according to some embodiments of this disclosure. FIG. 2 is a schematic plan view of a pressing apparatus according to some embodiments of this disclosure. FIG. 3 is a schematic plan view of a pressing apparatus carrying a tray and a workpiece queue according to some embodiments of this disclosure. FIG. 4 is a cross-sectional view of FIG. 3 in the A-A direction. FIG. 5 is an enlarged view of part B circled in FIG. 4. FIG. 6 is a first schematic diagram of a three-dimensional structure of a movable frame according to some embodiments of this disclosure. FIG. 7 is a second schematic diagram of a three-dimensional structure of a movable frame according to some embodiments of this disclosure. FIG. 8 is a third schematic diagram of a three-dimensional structure of a movable frame according to some embodiments of this disclosure. FIG. 9 is an enlarged view of part C circled in FIG. 8. FIG. 10 is a fourth schematic diagram of a three-dimensional structure of a movable frame according to some embodiments of this disclosure. FIG. 11 is an enlarged view of part D circled in FIG. 10. FIG. 12 is a schematic plan view of a single-row workpiece queue capable of being pressed by a pressing apparatus according to some embodiments of this disclosure. FIG. 13 is a schematic plan view of a double-row workpiece queue capable of being pressed by a pressing apparatus according to some embodiments of this disclosure. FIG. 14 is a schematic flowchart of a pressing method according to some embodiments of this disclosure. FIG. 15 is another schematic flowchart of a pressing method according to some embodiments of this disclosure. FIG. 16 is yet another schematic flowchart of a pressing method according to some embodiments of this disclosure. FIG. 17 is a schematic flowchart of a placing step according to some embodiments of this disclosure. FIG. 18 is a schematic flowchart of a positioning step according to some embodiments of this disclosure. FIG. 19 is a schematic flowchart of a pressing step according to some embodiments of this disclosure.

In some embodiments of this disclosure, for ease of description, the first direction, second direction, and third direction are specified, and the first direction, second direction, and third direction intersect each other. In the embodiments illustrated in FIG. 1 to FIG. 13, descriptions are provided assuming that the first direction, second direction, and third direction are perpendicular to each other. However, persons skilled in the art should understand that the embodiments of this disclosure are not limited to the case that the three directions are perpendicular to each other. For ease of description, as shown in FIG. 1 to FIG. 4, FIG. 12, and FIG. 13, the direction indicated by an arrow X is the first direction, the direction indicated by an arrow Y is the second direction, and the direction indicated by an arrow Z is the third direction (also referred to as the height direction). Sometimes, the third direction indicated by the arrow Z is referred to as "top" and the opposite direction is referred to as "bottom".

As shown in FIG. 1 to FIG. 11, a first aspect of this disclosure provides a pressing apparatus 100, configured to press a workpiece queue 200. The pressing apparatus 100 includes a placement table 101 and at least one pressing assembly 110. The placement table 101 is configured to support the workpiece queue 200, where the workpiece queue 200 includes a plurality of workpieces arranged along a first direction. Each pressing assembly 110 includes a first presser 113 and a stopper 114 arranged opposite the first presser 113, where the first presser 113 is configured to apply an acting force along the first direction to the workpiece queue 200, and the stopper 114 is configured to block the workpiece queue 200. The first presser 113 and the stopper 114 are constructed to be capable of moving towards or away from each other along the first direction, and the pressing assembly 110 is constructed to be capable of moving along a second direction intersecting the first direction.

During the production and manufacturing process of products such as batteries, grouped battery cell queues or battery unit queues need to be pressed to obtain a battery module with higher fastness. This facilitates subsequent processing such as binding and packing. The "pressing" in this embodiment of this disclosure includes abutting battery cells in the grouped battery cell queue or battery units in the grouped battery unit queue against each other more tightly. The pressing apparatus 100 in this embodiment of this disclosure is an apparatus capable of performing a pressing operation.

In an embodiment of this disclosure, the workpiece queue 200 includes a plurality of workpieces arranged along the first direction, and the workpiece may be, for example, a battery or a battery unit formed by combining at least two batteries. As shown in FIG. 12 and FIG. 13, the workpiece queue 200 may include, for example, a battery queue formed by arranging a single row of batteries or a battery cell queue formed by arranging the battery units. Certainly, in some other embodiments, the workpiece queue 200 may alternatively include a queue formed by arranging other workpieces.

In an embodiment of this disclosure, the battery may be a battery cell.

The battery cell refers to a basic unit that can implement mutual conversion between chemical energy and electric energy, and it can be used for producing a battery module or battery pack to supply electricity to an electric apparatus.

The battery cell may be a secondary battery. The secondary battery is a battery cell that can be reused, after being discharged, by activating the active material inside it through charging.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in this embodiment of this disclosure.

Although not shown, the battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent short circuit of the positive electrode and negative electrode and to allow the active ions to pass through.

In some embodiments, the battery cell further includes an electrolyte, and the electrolyte conducts ions between positive and negative electrodes. The electrolyte is not specifically limited to any particular type in this disclosure, and may be selected based on needs. The electrolyte may be in a liquid state, gel state, or solid state.

In some embodiments, the battery cell may include a housing. The housing is configured to encapsulate the electrode assembly, the electrolyte, and other components. The housing may be steel housing, aluminum housing, plastic housing (for example, polypropylene), composite metal housing (for example, copper-aluminum composite housing), aluminum-plastic film, or the like.

For example, the battery cell may be a cylindrical battery cell, a prismatic battery cell, a pouch battery cell, or a battery cell of another shape. The prismatic battery cell includes a square shell battery cell, a blade battery cell, or a polygonal battery such as a hexagonal battery. This is not particularly limited in this embodiment of this disclosure.

In some embodiments, the housing includes a cover and a shell, where the shell is provided with an opening, and the cover closes the opening to form a closed space for accommodating the electrode assembly and substances such as the electrolyte. The shell may be provided with one or more openings. One or more covers may be provided.

In some embodiments, the housing is provided with at least one electrode terminal, and the electrode terminal is electrically connected to a tab. The electrode terminal may be directly connected to the tab or indirectly connected to the tab through an adapter. The electrode terminal may be provided on the cover or may be provided on the shell.

In some embodiments, the housing is provided with a pressure relief mechanism. The pressure relief mechanism is configured to relieve internal pressure of the battery cell.

In an embodiment of this disclosure, the battery may alternatively be a single physical module that includes one or more battery cells for providing a higher voltage and capacity. When there are a plurality of battery cells, the plurality of battery cells are connected in series, parallel, or series-parallel through a busbar.

The pressing apparatus 100 according to an embodiment of this disclosure is described with reference to accompanying drawings. As shown in FIG. 1 and FIG. 2, the pressing apparatus 100 includes a placement table 101 and at least one pressing assembly 110.

The placement table 101 is configured to support a workpiece queue 200, and provides a stable placement platform for it. Specifically, the placement table 101 is configured to carry, for example, a workpiece queue to be pressed (a workpiece queue that has not been pressed) or a pressed workpiece queue, and a workpiece queue being pressed or a workpiece queue that has completely been pressed. The placement table 101 may directly support the workpiece queue 200, or may support the workpiece queue 200 through a tray or a similar structure. In a case that the placement table 101 directly supports the workpiece queue 200, the workpiece queue to be pressed may be, for example, placed on the placement table 101 by a robot arm or manually, and the pressed workpiece queue may be removed from the placement table 101 by a mechanical gripper and transported to another location. In a case that the placement table 101 supports the workpiece queue 200 through a tray 300 (details are described below), for example, the workpiece queue to be pressed can be brought to the placement table 101 along with the tray 300, and the pressed workpiece queue 200 can be transported from the placement table 101 to another location along with the tray 300.

In an embodiment of this disclosure, a support surface of the placement table 101 is approximately in the shape of a rectangle. In some other embodiments, the support surface of the placement table 101 may be alternatively in the shape of a square, a circle, a polygon, or in any other appropriate shapes. This embodiment of this disclosure does not particularly limit the shape of the support surface of the placement table 101 as long as the workpiece queue 200 can be stably carried.

The pressing assembly 110 is configured to press the workpiece queue 200 on the placement table 101. In this embodiment of this disclosure, the pressing apparatus 100 includes two pressing assemblies 110. However, in some other embodiments, the pressing apparatus 100 may alternatively include one pressing assembly 110 or more (more than two) pressing assemblies 110. The number of pressing assemblies 110 is not particularly limited in this embodiment of this disclosure. Unless otherwise specified, any one of the two pressing assemblies 110 is used herein as an example for description, with reference to the accompanying drawings.

The pressing assembly 110 can move along a second direction intersecting the first direction, and includes a first presser 113 configured to apply an acting force along the direction to the workpiece queue 200 and a stopper 114 configured to block the workpiece queue 200 under the acting force. The stopper 114 is disposed on opposite sides of the first presser 113 in the first direction. The acting force applied by the first presser 113 to the workpiece queue 200 may be a pushing force applied along the first direction.

When a workpiece queue to be pressed is placed on the placement table 101 or brought along the first direction to the placement table 101 along with the tray 300, a position of the workpiece queue 200 on the placement table 101 or in the tray 300 in the second direction may not be fixed, allowing for a tiny difference. In addition, the workpiece queues 200 in different sizes or specifications (for example, single-row battery modules and double-row battery modules) may be also placed at different positions on the placement table 101 or in the tray 300. Therefore, the pressing assembly 110 needs to move along the second direction to the vicinity of the position (also referred to as a preparatory pressing position) of the workpiece queue 200 before performing the corresponding pressing operation.

In this embodiment of this disclosure, the pressing assembly 110 can move along the second direction intersecting the first direction. Therefore, positions of the first presser 113 and the stopper 114 in the second direction can be automatically adjusted according to different positions and specifications of the workpiece queues 200. In this way, a pressing operation can be performed on the workpiece queues 200 at different positions and of different specifications. This improves the compatibility of the pressing apparatus 100, facilitating flexible production and improving the production efficiency.

When the pressing assembly 110 moves in position along the second direction, the workpiece queue 200 to be pressed is located between the first presser 113 and the stopper 114.

For example, the stopper 114 may always remain stationary in the first direction. In this way, when the pressing assembly 110 moves in position along the second direction and presses the workpiece queue 200, only the first presser 113 moves towards the stopper 114 along the first direction, applying a pushing force to the workpiece queue 200 along the first direction until the workpiece queue 200 reaches a predetermined length. The pressing operation is completed.

For another example, the first presser 113 and the stopper 114 can operate together, and move towards or away from each other along the first direction. In this way, when the pressing assembly 110 moves in position along the second direction and presses the workpiece queue 200, the first presser 113 and the stopper 114 move towards each other along the first direction until being in contact with the workpiece queue 200 located therebetween. In this case, the stopper 114 may remain stationary, and the first presser 113 continues moving along the first direction, applying a pushing force to the workpiece queue 200 along the first direction until the workpiece queue 200 reaches a predetermined length. The pressing operation is completed.

After the pressing operation is completed for the workpiece queue 200 to be pressed, the first presser 113 and the stopper 114 can move away from each other along the first direction and move along the second direction to their initial positions. In this way, the pressed workpiece queue 200 can be removed from the placement table 101 by a mechanical gripper or transported with the tray 300, so that the next batch of workpiece queues to be pressed can be placed on the placement table 101 or brought to the placement table 101 along with the tray 300. As a result, the pressing apparatus 100 can perform the pressing operation uninterruptedly.

In addition, a distance between the first presser 113 and the stopper 114 can be adjusted according to different sizes of workpiece queues 200 in the first direction or a size of the pressed workpiece queue 200 in the first direction. As a way of adjustment, for example, the strokes of the first presser 113 and the stopper 114 moving towards or away from each other can be adjusted according to the size of the workpiece queue 200 to be pressed in the first direction. Alternatively, the timing and position for controlling the first presser 113 and the stopper 114 to stop moving towards each other but to move away from each other can be controlled based on the distance between the first presser 113 and the stopper 114 measured by a distance meter or based on the size of the workpiece queue 200 being pressed in the first direction detected by a grating ruler sensor.

The first presser 113 and the stopper 114 can move towards or away from each other along the first direction. Therefore, the pressing apparatus 100 itself can adopt different pressing schemes for pressing the workpiece queues 200 of different specifications, without change of accessories. In this case, the pressing apparatus 100 can perform the pressing operation uninterruptedly, without a suspension for replacing accessories to accommodate the workpiece queues of different specifications. This improves the production efficiency and reduces the production cost on accessories of varied specifications and the space occupied by them.

In some embodiments of this disclosure, the pressing apparatus 100 includes a fixed frame 120 and at least one movable frame 130 disposed on the fixed frame 120 and capable of moving along the second direction, where each pressing assembly 110 is disposed on each movable frame 130.

As shown in FIG. 1, the fixed frame 120 is disposed on the placement table 101. As a specific example, the fixed frame 120 includes a frame body, and the frame body includes two first traverse beams 121 extending along the first direction, two second traverse beams 122 extending along the second direction, and four longitudinal beams 123 extending along the third direction. The two first traverse beams 121 are spaced apart along the second direction, the two second traverse beams 122 are respectively attached to positions between ends of the two first traverse beams 121 along the first direction, and the longitudinal beams 123 are respectively attached to the joints of the first traverse beams 121 and the second traverse beams 122.

In this embodiment of this disclosure, two movable frames 130 are provided, in correspondence with the number of pressing assemblies 110. In some other embodiments, one or more (more than two) movable frames 130 may be provided. In this embodiment of this disclosure, the number of movable frames 130 is not particularly limited and may be provided based on the number of pressing assemblies 110. Unless otherwise specified, any one of the two movable frames 130 is used herein as an example for description, with reference to the accompanying drawings.

As shown in FIG. 2, the movable frame 130 is arranged parallel to the two first traverse beams 121 and stretches across the two second traverse beams 122, where the second traverse beam 122 is provided with a traverse guide rail 1221 extending along the second direction. The movable frame 130 can reciprocate along the traverse guide rail 1221. As a specific example, as shown in FIG. 6 to FIG. 10, the movable frame 130 includes a meshing part 1301 and a first drive apparatus 1302. The meshing part 1301 can mesh with the traverse guide rail 1221 on the second traverse beam 122 and can reciprocate on the traverse guide rail 1221 under the driving force of the first drive apparatus 1302.

The first drive apparatus 1302 includes but is not limited to a motor. As a specific example, the first drive apparatus 1302 may be a servo motor.

For example, the meshing part 1301 may be a gear, and the traverse guide rail 1221 may be a gear rack. As a specific example, the meshing part 1301 may be a helical gear. For another example, the meshing part 1301 may be a nut meshing with a lead screw, and the traverse guide rail 1221 may be a lead screw. For still another example, the meshing part 1301 may be a slider, and the traverse guide rail 1221 may be a linear guide rail.

In this case, merely through the cooperation between the meshing part 1301 and the traverse guide rail 1221, the movable frame 130 can reciprocate along the second direction. Driven by the movable frame 130, the first presser 113 and the stopper 114 can reciprocate along the second direction to quickly reach the position corresponding to the workpiece queue 200. This features simple structure and motion control and ingenious design. In addition, the traverse guide rail 1221 can further limit the sliding track of the movable frame 130, improving the movement stability of the movable frame 130 along the second direction.

As shown in FIG. 1, a blocking piece 1222 is disposed on two opposite sides of the second traverse beam 122 along the second direction, where the blocking piece 1222 protrudes from a top surface of the second traverse beam 122 and is at least higher than the traverse guide rail 1221. In this way, the blocking piece 1222 can limit the position of the movable frame 130 to some extent, preventing the movable frame 130 from falling off the traverse guide rail 1221 when moving along the second direction. This improves the reliability of the pressing apparatus 100.

The following further describes the structure of the pressing assembly.

In some embodiments of this disclosure, as shown in FIG. 6 and FIG. 10, each movable frame 130 is provided with a stopper bracket 140 and a moving frame 150 capable of reciprocating relative to the movable frame 130 along the first direction, the stopper 114 is mounted on the stopper bracket 140, and the first presser 113 is mounted on the moving frame 150 and is capable of moving under a driving action of the moving frame 150.

As shown in FIG. 6 and FIG. 10, the movable frame 130 includes a lead screw 1303 extending along the first direction. The lead screw 1303 can be connected to an output terminal of a second drive apparatus 1304 and rotates under the driving force of the second drive apparatus 1304. The moving frame 150 is connected to a moving frame connecting plate 1501, and a side surface of the moving frame connecting plate 1501 back away from the moving frame 150 is permanently connected to an outer peripheral surface of a nut 1502 capable of moving on the lead screw 1303, so that the moving frame 150 can reciprocate along the lead screw 1303 under a driving action of the nut.

Therefore, the first presser 113 and the stopper 114 can be mounted on the movable frame 130. In addition, a simple structure can be used to enable the first presser 113 to move towards or away from the stopper 114 so as to apply or withdraw pressure.

In an embodiment of this disclosure, the movable frame 130 further includes two movable-frame guide rails 1305 extending along the first direction. The two movable-frame guide rails 1305 are parallel to the lead screw 1303 and arranged on opposite sides of the movable frame 130 along the third direction. Each movable-frame guide rail 1305 is provided with a first slider 1306 (see FIG. 10) capable of reciprocating thereon, and the side surface of the moving frame connecting plate 1501 back away from the moving frame 150 is permanently connected to both the outer peripheral surface of the nut 1502 and an outer peripheral surface of the first slider 1306. The disposition of two movable-frame guide rails 1305 can reduce the load of the lead screw 1303 and reduce the friction of the moving frame 150 when moving along the first direction, ensuring stable and smooth movement of the moving frame 150. This also effectively reduces energy consumption and facilitates energy conservation and environmental protection.

Certainly, persons skilled in the art should understand that the movable frame 130 may not be disposed on the movable-frame guide rail 1305, or one or more (more than two) movable-frame guide rails 1305 may be provided, which is not particularly limited in this embodiment of this disclosure.

In some embodiments, the moving frame 150 may be provided with a first-presser side baffle 1503, where the first-presser side baffle 1503 can move along the first direction independent of the first presser 113.

In an embodiment of this disclosure, as shown in FIG. 6 and FIG. 8, the stopper 114 is mounted on the stopper bracket 140, and the stopper bracket 140 is permanently connected to the movable frame 130. In other words, during the pressing operation, the stopper 114 does not move along the first direction, and the workpiece queue 200 can be pressed when the first presser 113 approaches along the first direction. However, in some other embodiments, the stopper bracket 140 can be arranged to be capable of reciprocating along the first direction relative to the movable frame 130, and the stopper 114 can also reciprocate along the first direction under the driving action of the stopper bracket 140. In this way, during the pressing operation, the workpiece queue 200 can be pressed when the first presser 113 and the stopper 114 move towards each other along the first direction.

In some embodiments, the stopper bracket 140 may also be provided with a stopper side baffle 1403. Specifically, the stopper bracket 140 may be provided with a stopper slide rail 1401 extending along the first direction, and the stopper side baffle 1403 is connected to the stopper slide rail 1401 through a stopper slide frame 1402. Driven by a drive apparatus such as a servo motor, the stopper slide frame 1402 can drive the stopper side baffle 1403 to move along the stopper slide rail 1401, so that the stopper side baffle 1403 can move along the first direction independent of the stopper 114.

In some embodiments of this disclosure, two pressing assemblies 110 may be provided. For ease of description, the two pressing assemblies 110 are referred to as a first pressing assembly and a second pressing assembly respectively.

As shown in FIG. 2 and FIG. 3, the pressing assembly 110 includes the first pressing assembly and the second pressing assembly, where the movable frame 130 includes a first movable frame 131 and a second movable frame 132, the first pressing assembly is disposed on the first movable frame 131 and constructed to be capable of moving along the second direction under a driving action of the first movable frame 131, and the second pressing assembly is disposed on the second movable frame 132 and constructed to be capable of moving along the second direction under a driving action of the second movable frame 132.

When in the initial positions as shown in FIG. 2, the first movable frame 131 and the second movable frame 132 are spaced apart at the farthest ends of the opposite sides of the fixed frame 120 along the second direction. The two movable frames 130 may have the same structure and motion control mode, and each movable frame 130 is provided with the pressing assembly 110. With two pressing assemblies 110 provided, when the workpiece queue 200 to be pressed is one double-row workpiece queue 200, any one of the two pressing assemblies 110 can be moved to press the double-row workpiece queue 200; when the workpiece queues 200 to be pressed are two single-row workpiece queues 200, the two pressing assemblies 110 can be moved to press the two single-row workpiece queues 200 simultaneously. This improves the machining efficiency of the pressing link, thereby improving the production efficiency of the entire production line.

Certainly, persons skilled in the art should understand that in some other embodiments, the pressing apparatus 100 may alternatively include only one movable frame 130, that is, only one pressing assembly 110, and may alternatively include three, four, or more movable frames 130 and pressing assemblies 110, which may specifically depend on a size of the pressing apparatus 100 and actual manufacturing difficulty.

In some embodiments of this disclosure, the first pressing assembly and the second pressing assembly are constructed to be capable of switching between a first pressing mode and a second pressing mode, in the first pressing mode, one of the first pressing assembly and the second pressing assembly performs a pressing operation, and in the second pressing mode, both the first pressing assembly and the second pressing assembly perform a pressing operation. The pressing operation is performed by the first presser 113 of each pressing assembly 110 moving towards the stopper 114 along the first direction.

For example, the pressing apparatus 100 can select the first pressing mode or second pressing mode for pressing based on the size, arrangement type, or number of the workpiece queues 200 to be pressed. In addition, the first pressing mode and the second pressing mode can be switched based on a change of the arrangement type and number of the workpiece queues 200 to be pressed. It should be noted that the change of the workpiece queue 200 includes the change the size of the single-row workpiece queue 200 in the second direction and the change of the size of the workpiece queue 200 to be pressed in the second direction caused by arranging workpieces into a double-row workpiece queue 200.

Battery pressing is used as an example for further description. For example, if the workpiece queues 200 to be pressed are two queues arranged in the same way as the battery queue shown in FIG. 12, the two battery queues can be pressed in the second pressing mode. If each battery queue is called a single-row module, the second pressing mode can be used to press the two queues of single-row modules simultaneously. It should be noted that the extending direction of the battery queue is the same as the first direction, and the first presser 113 and the stopper 114 respectively apply a pushing force to the battery queue from two ends of the battery queue in the first direction.

For another example, if the workpiece queue 200 to be pressed is a battery queue shown in FIG. 13, the battery queue can be pressed in the first pressing mode. If the battery queue is arranged into a double-row module, one queue of the double-row module can be pressed in the first pressing mode.

Persons skilled in the art should understand that the description herein about battery queue pressing is merely an example. The battery queue pressing scenarios are not limited thereto. For example, when the first pressing mode is used for pressing, the workpiece queue 200 may alternatively be a single-row battery queue with a larger size arranged along the second direction. When the second pressing mode is used for pressing, the workpiece queue 200 may alternatively be a double-row battery queue formed by arranging a plurality of battery units, that is, the first pressing assembly and the second pressing assembly together press one double-row battery queue.

In this way, the pressing apparatus 100 can press two workpiece queues 200 simultaneously, further improving the production efficiency and reducing the production cost. Moreover, the pressing apparatus 100 is designed with two pressing modes and can switch between the two pressing modes, so that the pressing apparatus 100 can press both the single-row workpiece queue and double-row workpiece queue. This further improves the compatibility of the pressing apparatus 100.

In some embodiments of this disclosure, the pressing apparatus 100 further includes a controller (not shown in the figures), where the controller is configured to control the first pressing assembly and the second pressing assembly to perform the pressing operation in the first pressing mode or the second pressing mode, based on preset information about an arrangement type of the workpiece queue 200.

For example, the controller may be implemented by a microcomputer, a programmable controller, or by other known means. The controller is not particularly limited in this embodiment of this disclosure as long as functions of the controller can be implemented.

Information such as the arrangement type of the workpiece queue 200 can be set on a host computer. In this way, the pressing apparatus 100 can automatically switch between the pressing modes based on different situations, so that workpiece queues 200 can be pressed using different pressing schemes based on their arrangement types. This increases the level of automation of the pressing apparatus 100. In addition, identity information of the workpiece queue including the information about the size and arrangement type of the workpiece queue can be written in an electronic tag, and the electronic tag is attached to the tray 300 holding the workpiece queue 200. When the tray 300 holding the workpiece queue 200 reaches the pressing apparatus 100, the pressing apparatus 100 obtains the information such as the size and arrangement type of the workpiece queue 200 by means of scanning or identification, determines that the first pressing mode or the second pressing mode is used for pressing based on the information, and then drives the corresponding movable frame and the pressing assembly on the movable frame based on the determined pressing mode. In this way, the pressing apparatus 100 can press the workpiece queues uninterruptedly even if they are arranged in different types, thereby improving the production efficiency.

In some embodiments of this disclosure, as shown in FIG. 6 to FIG. 11, the first presser 113 is provided with a presser head 1131 (see FIG. 6) for pushing the workpieces, and the stopper 114 is provided with an abutting surface 1141 (see FIG. 7) for abutting against the workpieces.

In this way, the workpiece queue 200 can directly or indirectly abut against the abutting surface 1141 of the stopper 114, and then the workpiece queue 200 can be pressed under the pushing force of the presser head 1131. Moreover, that pressing is performed by the presser head can adapt to the pressed surfaces of workpiece queues 200 of different specifications or the pressed surface of the tray 300 holding the workpiece queues 200.

The abutting surface 1141 of the stopper 114 is flat, so that pressure applied to the workpiece queue 200 can be distributed uniformly, improving the reliability and stability of the pressing apparatus 100.

For example, a buffer can be disposed on the presser head of the first presser 113 and the abutting surface of the stopper 114 to play a cushioning role when the pressing assembly 110 presses the workpiece queue 200. This reduces the possibility of damage to workpieces during pressing of the workpiece queue 200. The buffer includes but is not limited to a spring.

For another example, the presser head 1131 and the abutting surface 1141 may be made of an elastic material, so as to prevent undesirable situations such as noise or workpiece deformation caused by contact between the workpiece and the presser head and abutting surface made of rigid materials. The elastic material includes but is not limited to rubber.

In some embodiments of this disclosure, as shown in FIG. 1 and FIG. 5 to FIG. 7, the pressing apparatus 100 further includes a second presser 160, where the second presser 160 is configured to apply an acting force along a third direction to the workpiece queue 200, and the second presser 160 is disposed on the first movable frame 131 and/or the second movable frame 132 in a manner of being capable of reciprocating along the third direction, where the third direction intersects both the first direction and second direction.

For example, the acting force applied by the second presser 160 along the third direction to the workpiece queue 200 may be a pushing force (for example, downward pushing force or pressure) applied along the third direction.

In this way, the pressing apparatus 100 can also press a top surface of the workpiece queue 200, so that the workpiece queue 200 can also be pressed in the height direction, guaranteeing the dimensional accuracy of the workpiece queue 200 in the third direction.

In this embodiment of this disclosure, the second presser 160 is disposed on the first movable frame 131. In some other embodiments, the second presser 160 may alternatively be disposed on the second movable frame 132, or the second presser 160 may be disposed on both the first movable frame 131 and the second movable frame 132.

Persons skilled in the art should understand that when more movable frames 130 are provided, the pressing apparatus 100 may include more second pressers 160.

In some embodiments of this disclosure, as shown in FIG. 6 and FIG. 7, the second presser 160 is disposed on the first movable frame 131 or the second movable frame 132 through a moving carriage 161, where the moving carriage 161 includes a third-direction guide rail 162 extending along the third direction, and the second presser 160 is capable of moving along the third-direction guide rail 162.

As shown in FIG. 6 and FIG. 7, the moving carriage 161 includes a presser connecting plate 163. The presser connecting plate 163 is connected to the first movable frame 131 or the second movable frame 132, and a second slider 1631 is disposed on a side surface of the presser connecting plate 163 back away from the first movable frame 131 or the second movable frame 132. The second slider 1631 can slide along the third-direction guide rail 162, so that the moving carriage 161 can be disposed on the presser connecting plate 163 in a manner of being capable of moving along the third direction. As a result, the second presser 160 can move along the third direction.

In this way, a simple and stable structure can be used to enable the second presser 160 to move along the third direction, so that the pressing apparatus 100 can press the workpiece queue 200 along the third direction. This guarantees the dimensional accuracy of the workpiece queue 200 in the third direction.

In some embodiments of this disclosure, the moving carriage 161 is capable of moving along the first direction, and the moving carriage 161 further includes at least one moving-carriage slider 164 capable of sliding along the first direction, and the second presser 160 includes at least one pressing plate 165, where the at least one pressing plate 165 is capable of moving along with the moving-carriage slider 164.

As shown in FIG. 6 and FIG. 7, a third slider 1632 is further disposed on a side of the presser connecting plate 163 facing the movable frame 130, and the third slider 1632 can move along the movable-frame guide rail 1305. In this way, the presser connecting plate 163 can move along the first direction, thereby driving the moving carriage 161 and then the second presser 160 to move along the first direction. The movement of the third slider 1632 along the movable-frame guide rail 1305 can be implemented by a servo motor or the like. In addition, a gear rack rail may be disposed at the top of the movable frame 130, and a meshing part, for example, a helical gear, is disposed below the top of the presser connecting plate 163. The meshing part reciprocates along the gear rack rail, driving the presser connecting plate 163, the moving carriage 161, and then the second presser 160 to reciprocate along the first direction. It should be noted that the lead screw 1303 is not in contact with the presser connecting plate 163, so no interference exists therebetween.

The second presser 160 can move along the first direction to an appropriate position and press the workpiece queues 200 of different specifications along the third direction. This further improves the compatibility and flexibility of the pressing apparatus 100.

The second presser 160 includes at least one pressing plate 165, and the pressing plate 165 includes a pressing surface, where the pressing surface is used for abutting against the top surface of the workpiece queue 200. The pressing surface is approximately flat, so that pressure applied to the workpiece queue 200 can be distributed uniformly, improving the reliability and stability of the pressing apparatus 100. A buffer layer may be disposed on the pressing surface of the pressing plate 165, so as to prevent undesirable situations such as noise and deformation of the workpiece queue 200 caused by collision between the rigid pressing plate 165 and the top surface of the workpiece queue 200.

In the example shown in FIG. 6 and FIG. 7, the second presser 160 includes three pressing plates 165. These three pressing plates 165 may be close as shown in FIG. 6 and FIG. 7 or apart from each other with a specific spacing.

The moving carriage 161 further includes a carriage slide rail 166 extending along the first direction and at least one moving-carriage slider 164 capable of sliding along the carriage slide rail 166, and the pressing plate 165 can move along the first direction along with the moving-carriage slider 164.

Therefore, when a plurality of pressing plates 165 are provided, the spacing between the plurality of pressing plates 165 can be adjusted to accommodate more specifications of workpiece queues.

The number of pressing plates 165 and the number of moving-carriage sliders 164 are not particularly limited in this embodiment of this disclosure, which may be one, two, three, or more.

In some embodiments of this disclosure, the intersecting includes perpendicular intersecting.

As mentioned above, the first direction, the second direction, and the third direction intersect, and the intersecting herein includes perpendicular intersecting. In this case, the workpiece queue 200 can be pressed in the perpendicular direction, which is particularly suitable for pressing workpiece queues 200 in the shape of a cuboid.

However, persons skilled in the art should understand that the embodiments of this disclosure are not limited to the case that the three directions are perpendicular to each other.

In some embodiments of this disclosure, the placement table 101 is provided with a lifting mechanism 102 for raising and lowering a tray 300 carried by the placement table 101, and the tray 300 is configured for holding the workpiece queue 200.

As shown in FIG. 1, FIG. 4, and FIG. 5, the lifting mechanism 102 includes a lifting plate 1021 and a lifting apparatus 1022. The lifting plate 1021 is provided with a plurality of universal balls 104 arranged evenly in a spaced-apart manner. When the lifting mechanism 102 is in a lowered state, the tray 300 transported by the tray conveyor line 400 can be smoothly located above the universal ball 104 and carried by the universal ball 104. In this way, the tray 300 can be brought to a predetermined position on the placement table 101 more smoothly and quickly.

When the tray 300 is at the predetermined position on the placement table 101, the lifting plate 1021 rises along the third direction under the driving force of the lifting apparatus 1022, and the tray 300 disengages from the tray conveyor line 400 by using the lifting mechanism 102. In this way, the tray 300 can be easily aligned and positioned.

For example, the lifting apparatus 1022 may be implemented by a lifting cylinder. To be specific, a cylinder body of the lifting cylinder is fixed below the placement table 101, and a cylinder rod, which is retractable relative to the cylinder body, is connected below the lifting plate 1021, and the lifting plate 1021 ascends or descends with the extension and retraction of the cylinder rod. One, two, or more lifting apparatuses 1022 may be provided. In this embodiment of this disclosure, two lifting apparatuses 1022 are provided.

As shown in FIG. 2, the lifting plate 1021 is further provided with a positioning apparatus 105 for positioning the tray 300. When the tray 300 is being brought to the placement table 101 along a guide rail of the tray conveyor line 400, the positioning apparatus 105 is in a sunk position and does not interfere with the movement of the tray 300. When the tray 300 stops under an action of the blocking apparatus 103 (described in detail later), the positioning apparatus 105 rises and meshes with a positioning recess at the bottom of the tray 300, so as to position the tray 300 reliably and protect the tray 300 against accidents such as falling during the rising process. This helps improve the stability of the pressing assembly 110 when pressing the workpiece queue 200.

For example, the positioning apparatus 105 may be a positioning post or positioning pin, or any other suitable positioning apparatus. In this embodiment of this disclosure, two positioning apparatuses 105 are provided, and the two positioning apparatuses 105 are diagonally opposite and spaced apart on the lifting plate 1021. In some other embodiments, one, two, or more positioning apparatuses 105 may be provided, and the number and structure of the positioning apparatuses 105 are not particularly limited in this embodiment of this disclosure.

For example, the lifting mechanism 102 may further include a synchronous lifter. The synchronous lifter may be a commercially available synchronous lifter. In this way, the tray 300 can be smoothly moved up and down, reducing undesirable situations such as movement and deformation of the workpiece queue caused by the inclination of the tray 300.

As shown in FIG. 1 to FIG. 3, the placement table 101 is further provided with at least one gripper assembly. The gripper assembly includes two grippers 106, and the two grippers 106 are spaced apart on opposite sides of the lifting plate 1021 along the second direction and can move towards or away from each other along the second direction. The gripper 106 is provided with a contact surface for contact with the tray 300, and in the third direction, the contact surface is slightly higher than the lifting plate 1021 in a risen state and is approximately flush with the tray 300 in a risen state. In this way, when the tray 300 reaches the predetermined position on the placement table 101 and is raised, the two grippers 106 move towards each other along the second direction until the contact surface touches the tray 300, so that the gripper assembly can grip the tray 300, limiting the position of the tray 300. This further improves the reliability of positioning the tray 300, and further reduces undesirable situations such as accidental falling of the tray 300 during the lifting process.

For example, a gripping cylinder may be used to enable the two grippers 106 to move towards or away from each other.

In this embodiment of this disclosure, two gripper assemblies are provided and spaced apart on the placement table 101 along the first direction. In some other embodiments, one or more (more than two) gripper assemblies may be provided.

As an apparatus holding the workpiece queue, the tray 300 at least includes a bottom plate. The tray 300 holds the workpiece queue 200. After being pressed, the workpiece queue 200 can be directly moved out of the pressing apparatus 100 through the tray 300 to the next process. In this way, the pressed workpiece queue 200 can be directly moved out of the pressing apparatus 100 through the tray 300 instead of a robot arm. This simplifies production line equipment, reduces control steps, and helps improve the production efficiency. In addition, the workpiece queue 200 is directly moved out with the tray 300 after being pressed, helping maintain the shape of the workpiece queue 200.

In some embodiments of this disclosure, a blocking apparatus 103 is disposed on a side of the placement table 101 in the first direction, and the blocking apparatus 103 is configured to block the tray 300.

As shown in FIG. 2 and FIG. 3, two blocking apparatuses 103 are provided, but the number of blocking apparatuses 103 is not limited thereto and may be one or more. For example, the blocking apparatus 103 may be implemented by a blocking cylinder or in other forms such as a blocking piece. The blocking apparatus 103 may be controlled by a controller so as to block the tray 300 at the right time.

In this way, the tray 300 can be easily stopped at the predetermined position on the placement table 101 by the blocking apparatus 103.

The placement table 101 may further be provided with an information reading apparatus for reading identity information of the tray 300. As a specific example, an electronic tag is disposed on the tray 300 and can be read by the information reading apparatus. By reading the electronic tag, the information reading apparatus can obtain information related to the tray 300, where the information related to the tray 300 includes information about the workpiece queue 200 held by the tray 300. In a case that the workpiece queue 200 is a battery queue, the information related to the tray 300 includes the specification of the battery queue, the arrangement type of the battery queue (for example, a single-row module or a double-row module), and the like.

In addition, the placement table 101 may be further provided with a position detection apparatus for detecting whether the tray 300 is in position, including whether being in position in the first direction and/or whether being horizontal. For example, the position detection apparatus may be a commercially available position switch.

In some embodiments of this disclosure, as shown in FIG. 4, FIG. 5, and FIG. 11, each pressing assembly 110 further includes a sleeve 115, and the sleeve 115 is disposed at a position allowing an opening of the sleeve 115 to be fitted over a tray lead screw 301, where the tray lead screw 301 is provided in the tray 300 carried by the placement table 101 and extends from an end of the tray 300 along the first direction.

When the pressing apparatus 100 is pressing the workpiece queue 200, the tray 300 holding the workpiece queue 200 cannot move to ensure the accuracy and stability of the pressing operation. Therefore, after the tray 300 holding the workpiece queue 200 is brought to the placement table 101 and raised to be disengaged from the tray conveyor line 400, the tray 300 needs to be fixed before the pressing operation.

As mentioned above, the tray 300 is positioned using the positioning apparatus 105 and the gripper assembly. However, this can only ensure that the tray 300 does not move relative to the lifting plate 1021. During pressing of the workpiece queue 200, the pressing assembly 110 applies a great force to the workpiece queue 200. Therefore, it is necessary to further ensure that the tray 300 does not move, so as to prevent pressing failure.

In this embodiment of this disclosure, the tray 300 is provided with a tray lead screw 301, and the tray lead screw 301 extends from an end of the tray 300 along the first direction, so that the tray 300 can be permanently connected to the pressing apparatus 100 by fitting the sleeve 115 over the tray lead screw 301. This prevents the tray 300 from moving during the pressing process and ensures proper processing of the workpiece queue 200, improving the stability and reliability of the pressing operation.

For example, the sleeve 115 may be fitted over or detached from the tray lead screw 301 under the control of a telescopic cylinder.

In an embodiment of this disclosure, as shown in FIG. 5, except for the bottom plate, the tray 300 further includes a first vertical plate 302 and a second vertical plate 303 for limiting positions of two ends of the workpiece queue 200 in the first direction. When the pressing assembly 110 presses the workpiece queue 200 held in the tray 300, the abutting surface 1141 of the stopper 114 abuts against the first vertical plate 302, and the presser head 1131 of the first presser 113 presses the second vertical plate 303.

A meshing part is disposed below the second vertical plate 303 and connected to the tray lead screw 301. The meshing part may be integrated with the second vertical plate 303, or may be separated from the second vertical plate 303 but assembled together. The meshing part may be, for example, a nut capable of meshing with the tray lead screw 301. In this way, when the presser head of the first presser 113 applies a pushing force along the first direction to the second vertical plate 303 for indirect pressing of the workpiece queue 200, the second vertical plate 303 moves along the first direction. The tray lead screw 301 may be, for example, a self-locking lead screw, that is, the tray lead screw 301 and the meshing part of the second vertical plate 303 can be mutually locked. When the pressing operation is completed, the sleeve 115 still drives the tray lead screw 301 to rotate to some extent, so that the tray lead screw 301 and the meshing part are self-locked. In other words, when the second vertical plate 303 stops moving, it is left stationary at the current stop position. In this way, after the pressing is completed, even if the sleeve 115 is detached from the tray lead screw 301 later, the second vertical plate 303 does not move due to self-locking of the meshing part and the tray lead screw 301, so that the workpiece queue 200 can be maintained at the predetermined length after the pressing. This improves the reliability of the pressing apparatus 100.

For example, the pressing apparatus 100 further includes a detection apparatus for detecting the length of the workpiece queue 200 in the first direction, and the detection apparatus may be disposed on the placement table 101. The detection apparatus may be arranged to ascend and descend along the third direction relative to the lifting plate 1021. In this case, when the tray 300 is being brought to the placement table 101, the detection apparatus descends to a position not interfering with the movement of the tray 300, and when the tray 300 is in position and raised by the lifting mechanism 102 to be in a state of being disengaged from the tray conveyor line 400, the detection apparatus is also raised to a position to detect the length of the workpiece queue 200 in the tray 300. For example, the detection apparatus may be a distance meter.

In this way, the length of the workpiece queue 200 can be detected, so as to learn about the current pressing status, and then accurate control can be performed based on the current pressing status, for example, whether to end pressing or continue pressing.

The following describes the action of the pressing apparatus 100.

For example, the pressing apparatus 100 can carry the workpiece queue 200 through the tray 300. For example, the tray 300 can be brought by the tray conveyor line 400 from a previous process to the placement table 101 of the pressing apparatus 100. The tray 300 on the placement table 101 is raised by the lifting plate 1021 driven by the lifting apparatus 1022, so that the tray 300 disengages from the conveyor line of the production line.

When the tray 300 is raised to a position, the pressing assembly 110 moves to the preparatory pressing position along the second direction, and the sleeve 115 is fitted over the tray lead screw 301 of the tray 300 to fix the tray 300. The workpiece queue 200 is pressed by the first presser 113 moving towards the stopper 114 along the first direction. After the pressing is completed, the sleeve 115 still drives the tray lead screw 301 to rotate to some extent to lock the tray lead screw 301 and leave it distant so that they are no longer in a sleeved connection. The lifting plate 1021 is driven by the lifting apparatus 1022 to lower the tray 300 to a position allowing the tray 300 to be smoothly brought onto the tray conveyor line 400. Driven by a pressing motor, the pressed workpiece queue 200 is transported to the next process along with the tray 300 for subsequent operations.

A second aspect of this disclosure provides a battery production line. As shown in FIG. 3 and FIG. 4, the battery production line includes a tray conveyor line 400 and the pressing apparatus 100 according to any one of the foregoing embodiments. The tray conveyor line 400 places trays 300 on the placement table 101 or removes them from the placement table 101, and the first presser 113 of the pressing apparatus 100 moves towards the stopper 114 along the first direction to perform a pressing operation on a battery queue carried by the tray 300 on the placement table 101.

In the battery production line provided in this embodiment of this disclosure, the workpiece queue to be pressed is brought to the placement table 101 along with the tray 300, and the pressed workpiece queue is transported to a next machining position still along with the tray 300. Therefore, when the pressing apparatus 100 is used to press the workpiece queue 200, the workpiece queue to be pressed is placed in the tray 300 on the placement table 101.

The battery production line includes the tray conveyor line 400, where the tray conveyor line 400 is configured to transport the tray 300. The tray conveyor line 400 can be connected to the placement table 101 of the pressing apparatus 100, so that the tray 300 can be brought to the placement table 101 from the tray conveyor line 400, and the tray can be removed from the placement table 101 via the tray conveyor line 400 after the pressing is completed.

For example, the tray conveyor line 400 may be a conveyor belt such as a strap, a plurality of rollers arranged side by side, or a plurality of chains or speed chains.

In this way, workpiece queues 200 can be pressed rapidly in an automated manner, improving the pressing efficiency. In addition, the workpiece queues of varied specifications, for example, single-row workpiece queues and double-row workpiece queues, can be pressed in different pressing modes, improving the compatibility. Moreover, this also improves the flexible production of the battery production line.

In some embodiments of this disclosure, the workpiece includes at least one of a battery and a battery unit formed by combining at least two batteries. The workpiece queue 200 includes at least one of a battery queue formed by arranging a single row of batteries and a battery unit queue formed by arranging the battery units.

In this way, battery pressing is supported. In addition, battery queues of varied specifications can be accommodated, for example, a single-row battery queue formed by arranging single rows of batteries and a double-row battery queue formed by arranging double rows of batteries. This improves the compatibility (flexibility) of the pressing apparatus 100 and even the entire battery production line, and also improves the efficiency of grouping batteries.

A third aspect of this disclosure provides a pressing method, where a pressing apparatus 100 is configured to press a workpiece queue 200, the pressing apparatus 100 includes a placement table 101 and at least one pressing assembly 110, each pressing assembly 110 includes a first presser 113 and a stopper 114 arranged opposite the first presser 113, and each pressing assembly 110 is constructed to be capable of moving along a second direction intersecting a first direction. As shown in FIG. 14, the pressing method includes the following steps.

S100. Placing step. Place a tray carrying a workpiece queue on a placement table and bring the tray to a predetermined position.

The workpiece queue 200 includes a plurality of workpieces arranged in the first direction, and the tray 300 includes a first vertical plate 302 and a second vertical plate 303 for limiting positions of two ends of the workpiece queue 200 in the first direction.

S200. Positioning step. Move at least one pressing assembly along a second direction to a preparatory pressing position.

Each pressing assembly 110 includes the first presser 113 and the stopper 114, and at the preparatory pressing position, each workpiece queue 200 is located between the first presser 113 and the stopper 114 of each pressing assembly 110.

S300. Pressing step. Move a first presser towards a stopper along a first direction to perform a pressing operation on the workpiece queue until the workpiece queue reaches a predetermined length.

In this way, the pressing apparatus 100 can press the workpiece queues 200 automatically and efficiently. In addition, workpiece queues 200 in different sizes are accommodated, presenting good compatibility.

In some embodiments of this disclosure, as shown in FIG. 15, before the positioning step, the pressing method further includes the following steps.

S008. Reading step. Read information about the workpiece queue.

S009. Determine whether the tray contains the workpiece queue.

If the tray 300 does not contain the workpiece queue 200, remove the tray 300 from the placement table 101, or if the tray 300 contains the workpiece queue 200, proceed to a type determining step.

In step S008, an information reading apparatus can be used to read an electronic tag of the tray 300 to obtain information related to the tray 300, for example, the size and arrangement type of the workpiece queue 200 and whether a first pressing mode or a second pressing mode is used for pressing.

In a case that the workpiece queue 200 is a battery queue, the information related to the tray 300 includes the specification of the battery queue, the arrangement type of the battery queue (for example, a single-row module or a double-row module), and the like.

In this way, whether a tray 300 contains a workpiece queue 200 and information about the workpiece queue 200 can be quickly determined, so that the workpiece queue 200 can be pressed correctly, reducing the risk of misoperation.

In some embodiments of this disclosure, the pressing assembly 110 includes a first pressing assembly and a second pressing assembly. The first pressing assembly and the second pressing assembly are constructed to be capable of switching between a first pressing mode and a second pressing mode, in the first pressing mode, one of the first pressing assembly and the second pressing assembly performs a pressing operation, in the second pressing mode, both the first pressing assembly and the second pressing assembly perform a pressing operation, and in the type determining step, an arrangement type of the workpiece queue 200 is determined based on the read information about the workpiece queue 200, where the arrangement type is used for determining that the pressing operation is performed in the first pressing mode or the second pressing mode.

In this way, after the arrangement type of the workpiece queue 200 is determined, a pressing mode matching the arrangement type can be selected to accommodate the single-row workpiece queue and double-row workpiece queue. In addition, the pressing mode can be switched automatically, helping improve the production efficiency.

In some embodiments of this disclosure, the pressing apparatus 100 further includes a second presser 160 configured to apply an acting force along a third direction to the workpiece queue 200. As shown in FIG. 16, after the positioning step and before the pressing step, the pressing method further includes the following step.

S299. Down-pressing step. Move a second presser along a third direction to press down on the workpiece queue.

This can further improve the dimensional accuracy of the workpiece queue 200 in the third direction.

In some embodiments of this disclosure, as shown in FIG. 17, the placing step includes the following steps.

S101. Block, using a blocking apparatus, the tray moving along a first direction to place the tray on the placement table.

S102. Raise the placement table using a lifting mechanism of the placement table, so that the placement table disengages from a tray conveyor line that transports the tray, whereby the tray is brought to the predetermined position.

In this way, the tray 300 can be placed in the expected position, and aligned and positioned without being affected by the tray conveyor line 400. In addition, the tray conveyor line 400 cannot be easily damaged.

In some embodiments of this disclosure, as shown in FIG. 18, the positioning step includes the following steps.

S201: Move the pressing assembly along the second direction to position each workpiece queue between a first presser and a stopper of each pressing assembly, based on an arrangement type.

If the arrangement type is a double-row workpiece queue, one of the first pressing assembly and the second pressing assembly is moved along the second direction, and if the arrangement type is a single-row workpiece queue, both the first pressing assembly and the second pressing assembly are moved along the second direction.

S202. Bring a first vertical plate of the tray into contact with the stopper, and position the tray by having a sleeve of the pressing assembly fitted over a tray lead screw, where the tray lead screw is disposed in the tray and extends from an end of the tray along the first direction.

S203. Move the first presser, which has moved to a position corresponding to the workpiece queue, along the first direction to the vicinity of a second vertical plate of the tray.

In this way, one or both of the first pressing assembly and the second pressing assembly can be made to operate based on the arrangement type of the workpiece queue 200, so that the pressing operation can be performed automatically. In addition, through the cooperation between the sleeve 115 and the tray lead screw 301, the tray 300 can be fixed at the preparatory pressing position, so as to stably maintain the workpiece queue 200 at an appropriate position.

In steps S202 and S203, the tray lead screw 301 is a self-locking screw, and can be mutually locked together with the meshing part of the second vertical plate 303 of the tray 300 after the pressing is completed, so that the second vertical plate 303 can be maintained at the position where the pressing is completed. In this way, the length of the workpiece queue 200 in the first direction remains unchanged after the pressing is completed, so that the workpiece queue 200 can be maintained at a predetermined length.

In some embodiments of this disclosure, as shown in FIG. 19, the pressing step includes the following steps.

S301. Based on the arrangement type, move the first presser towards the stopper along the first direction to perform a pressing operation on the workpiece queue.

If the arrangement type is a double-row workpiece queue, the first presser of one of the first pressing assembly and the second pressing assembly performs the pressing operation, and if the arrangement type is a single-row workpiece queue, the first pressers of both the first pressing assembly and the second pressing assembly perform the pressing operation.

S302. Determine whether each pressed workpiece queue has the predetermined length.

If every workpiece queue 200 has the predetermined length, proceed to a locking step, if any workpiece queue 200 is longer than the predetermined length, make the first presser 113 corresponding to that workpiece queue 200 continue pressing until the workpiece queue 200 reaches the predetermined length, and if any workpiece queue 200 is shorter than the predetermined length, determine that the workpiece queue 200 is unqualified under pressing criteria. In the locking step, the sleeve 115 fitted over the tray lead screw 301 is rotated to be locked, thereby preventing the second vertical plate 303 from moving away from the first vertical plate 302 along the first direction, so as to maintain the workpiece queue 200 at the predetermined length.

In step S302, a detection apparatus, for example, may be used to detect whether the current workpiece queue 200 has the predetermined length.

For example, the detection apparatus is used to detect the length (a distance between two large end surfaces of the queue) of the current workpiece queue 200 in the first direction. Whether the length is the same as the predetermined length is determined, for example, whether the difference from the predetermined length is within a specified range of tolerance. For example, a difference of 5 mm from the predetermined length is considered with the range of tolerance. If the measured length is greater than the predetermined length (beyond the range of tolerance), the pressing assembly 110 can be controlled to perform supplementary pressing until the workpiece queue 200 has a length with the difference falling within the specified range of tolerance. If the measured length is less than the predetermined length (beyond the range of tolerance), the workpiece queue 200 is considered unqualified and may be moved to a specified place.

In this way, pressing can be performed based on the arrangement type of the workpiece queue 200, so as to support pressing of both single-row workpiece queues and double-row workpiece queues. In addition, the length of a workpiece queue 200 is checked after a pressing operation. Therefore, whether appropriate pressing is performed can be learned in a timely manner. Then, supplementary pressing is performed or the workpiece queue 200 is considered unqualified under pressing criteria, based on actual situations. In addition, the locking step can maintain the pressed workpiece queue 200 at a predetermined length, facilitating subsequent processes.

The following describes specific examples of some embodiments of this disclosure, with reference to the accompanying drawings.

As a specific example, two single-row battery unit queues need to be pressed. The pressing apparatus 100 includes the placement table 101 and a rack frame (the movable frame 130), where the rack frame includes a first rack frame (the first movable frame 131) and a second rack frame (the second movable frame 132) arranged on two opposite sides of the pressing apparatus 100 in the second direction, respectively. The first rack frame is provided with a first presser head and a first positioning stop (the first pressing assembly), where the first presser head and the first positioning stop are arranged on opposite sides of the first rack frame in the first direction, respectively. The second rack frame is provided with a second presser head and a second positioning stop (the second pressing assembly), where the second presser head and the second positioning stop are arranged on opposite sides of the second rack frame in the first direction, respectively. The first presser head and the second presser head are configured to apply a pushing force along the first direction to a battery cell queue. The first rack frame and the second rack frame are further provided with a third presser head (the second presser 160), and the third presser head is configured to apply a pushing force along the third direction to the battery cell queue.

After the tray 300 is brought to the predetermined position on the placement table 101, the tray 300 is raised by the lifting mechanism 102 and disengaged from the production line. When determining that the tray 300 contains two single-row battery cell queues, the controller controls the pressing apparatus 100 to use the second pressing mode. In this case, both the first rack frame and the second rack frame move along the second direction to the vicinity of the two single-row battery queues, so that the two single-row battery queues are located between the first presser head and the first positioning stop and between the second presser head and the second positioning stop, respectively. Then, the third presser head moves along the third direction to push top surfaces of the two battery cell queues. Finally, the two single-row battery queues are pressed simultaneously along the first direction by the first presser head moving towards the first positioning stop and the second presser head moving towards the second positioning stop.

Through cooperation between two sets of presser heads and positioning stops, the two battery cell queues can be pressed simultaneously in a simple and automated manner, so that pressing can be performed quickly. This greatly improves the working efficiency of the pressing apparatus 100.

After the pressing operation is completed, the two presser heads move away from the two positioning stops along the first direction, respectively, the first rack frame and the second rack frame return to their initial positions under the control of the controller, and the tray 300 is lowered by the lifting mechanism 102 and moves automatically to the next process.

The pressing apparatus 100 in the specific embodiment of this disclosure can achieve automatic feeding, automatic pressing, and automatic discharging, and quick pressing of battery cell queues, thereby increasing the level of automation and effectively reducing the labor cost. In addition, two battery cell queues can be pressed simultaneously, which improves the production efficiency, reduces the production cost, and facilitates flexible production.

Furthermore, the controller can automatically adjust the distance between each presser head and the positioning stop during pressing based on the actual desired size of the battery cell queue. Therefore, the pressing apparatus 100 can accommodate battery cell queues of varied sizes, improving the compatibility.

The specific operation process of pressing a battery queue is described below as an example.

First, the controller determines whether the placement table 101 carries the tray 300. If the tray 300 is detected, it is determined that the tray 300 is in position and information about the tray 300 is read.

If the controller determines that no tray 300 is detected at the predetermined position, the controller proceeds with the following process: waiting for the tray 300 on the tray conveyor line 400 to be brought to the predetermined position on the placement table 101. That is, the controller determines whether there is a tray 300 at the pressing front-end of the tray conveyor line 400. If there is a tray 300 at the pressing front-end of the production line, the controller starts the pressing motor, allowing the tray 300 to be placed on the tray conveyor line 400, and stops the pressing motor when the tray 300 reaches the predetermined position on the placement table 101.

If there is no tray 300 on the tray conveyor line 400, the tray 300 will not be placed on the placement table 101. Wait for a while, generally at least one production cycle, for example, several seconds. As the wait begins, the controller starts the pressing motor, and then stops the pressing motor when the tray 300 on the tray conveyor line 400 arrives.

During operation, the pressing motor provides a driving force for the tray conveyor line 400, so that the tray 300 on the tray conveyor line 400 is brought to the predetermined position on the placement table 101. If there is a tray 300 at the predetermined position on the placement table 101, the controller stops the pressing motor, so that the tray 300 on the tray conveyor line 400 is not transported to the predetermined position on the placement table 101.

The placement table 101 is further provided with two blocking apparatuses 103 and a distance meter used as a detection apparatus. The blocking apparatus 103 is configured to prevent extra movement of the tray 300, and the distance meter is configured to detect the length of a battery queue in the tray 300. The distance meter periodically or aperiodically measures the length of the battery queue and reports the length to the controller. Then, the controller determines whether the battery queue reaches the predetermined length based on the length.

During implementation, an industrial in-position sensor (also referred to as a position sensor) as a position detection apparatus may be disposed to detect whether the tray 300 reaches the predetermined position. If the in-position sensor detects that the tray 300 reaches the predetermined position, the in-position sensor sends tray arrival information to the controller, and the controller determines that the tray 300 has reached the predetermined position based on the tray arrival information from the in-position sensor. Usually, the in-position sensor can detect the position of an object, relative position change, or continuous position change.

After the tray 300 reaches the predetermined position on the placement table 101, the controller starts a lifting cylinder used as the lifting apparatus 1022 on the placement table 101, and the lifting cylinder drives the lifting plate 1021 on the placement table 101 to raise the tray 300 and disengage the tray 300 from the tray conveyor line 400.

In practice, the tray 300 is further provided with a sensor (hereinafter referred to as a leveling sensor) for checking whether the tray 300 is placed stably. For example, the level sensor is implemented using a proximity switch sensor. A pair of proximity switch sensors are arranged on opposite sides of the tray bottom respectively, for example, at two corners of one side or at two diagonal corners.

When the tray is in position, the controller starts a gripping cylinder, and the gripper assembly grips the tray 300 under the driving force of the gripping cylinder. In addition, the controller receives a leveling signal sent by the leveling sensor. If the leveling signal indicates that the tray is stable, the controller uses a barcode scanner functioning as an information reading apparatus to read the electronic tag on the tray (such as battery-related information stored by RFID), and determines, based on the read battery-related information, whether the battery queue to be pressed in the tray is a single-row battery queue or a double-row battery queue.

The controller controls the pressing apparatus 100 to use the first pressing mode or the second pressing mode, based on the read battery-related information. If the read battery-related information indicates that the battery queue is a single-row battery queue, the second pressing mode is used. Then, the controller controls both the first pressing assembly and the second pressing assembly to perform the pressing operation. If the read battery-related information indicates that the battery queue is a double-row battery queue, the first pressing mode is used. Then, the controller controls one of the first pressing assembly and the second pressing assembly to perform the pressing operation. After the pressing mode is determined, the controller controls the corresponding pressing assembly 110 to move to the vicinity of the battery queue along the second direction. At this time, the controller starts the telescopic cylinder of the sleeve, and the sleeve 115 is fitted over the tray lead screw 301 of the tray 300 under the driving force of the telescopic cylinder, so as to fix the tray 300. Then, the controller controls the first presser 113 to move towards the stopper 114 along the first direction to press the battery queue until the distance meter detects that the battery queue reaches the predetermined length. Next, the controller controls the sleeve 115 to still drive the tray lead screw 301 of the tray 300 to rotate to some extent, so that the second vertical plate 303 can be locked with the tray lead screw 301, thereby maintaining the battery queue at the predetermined length.

After the pressing is completed, the controller further determines whether the battery queue is a single-row battery queue or a double-row battery queue based on product information. For the single-row battery queue, the single-row battery queue information, task number, and other related information are bound and stored. For the double-row battery queue, the double-row battery queue information, task number, and other related information are bound and stored, and the stored information is written in the electronic tag of the module tray.

After determining that the pressing is completed for the tray 300, the controller resets all electrical mechanical parts (such as the servo motor and cylinders). After the information is written in the electronic tag of the tray 300, the controller controls the pressing motor to continue working, so that the pressed module tray is removed and the next tray 300 is brought to the predetermined position on the placement table 101.

After the pressing is completed for the current tray 300, the controller determines whether the work order is completed. If the work order is completed, it is determined that the pressing is completed. The controller records the number of completed modules and writes the current station number in the tray 300 for recording. Then, a new work order is used. When a work order is not completed, the controller records the number of completed modules and the number of uncompleted modules. If one module is pressed, the number of uncompleted modules becomes less by one. The pressing process is repeated until the work order is completed.

The foregoing embodiments are merely intended for describing the technical solutions of this disclosure but not for limiting this disclosure. Although this disclosure is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this disclosure. They should all be covered in the scope of this disclosure. In particular, in absence of structural conflict, the various technical features mentioned in the embodiments can be combined in any manner.

### Industrial practicability

This disclosure provides a pressing apparatus, a battery production line, and a pressing method, so that battery queues can be pressed rapidly in an automated manner and high compatibility is achieved.

## Claims

1. A pressing apparatus for pressing a workpiece queue, comprising:
a placement table, configured to support the workpiece queue, wherein the workpiece queue comprises a plurality of workpieces arranged along a first direction; and
at least one pressing assembly, wherein each pressing assembly comprises a first presser and a stopper arranged opposite the first presser, wherein the first presser is configured to apply an acting force along the first direction to the workpiece queue, the stopper is configured to block the workpiece queue, and the first presser and the stopper are constructed to be capable of moving towards or away from each other along the first direction, wherein
the pressing assembly is constructed to be capable of moving along a second direction intersecting the first direction.

2. The pressing apparatus according to claim 1, wherein
the pressing apparatus comprises a fixed frame and at least one movable frame disposed on the fixed frame and capable of moving along the second direction, wherein each pressing assembly is disposed on each movable frame.

3. The pressing apparatus according to claim 2, wherein
each movable frame is provided with a stopper bracket and a moving frame capable of reciprocating relative to the movable frame along the first direction,
the stopper is mounted on the stopper bracket, and
the first presser is mounted on the moving frame and is capable of moving under a driving action of the moving frame.

4. The pressing apparatus according to claim 2, wherein
the pressing assembly comprises a first pressing assembly and a second pressing assembly,
the movable frame comprises a first movable frame and a second movable frame,
the first pressing assembly is disposed on the first movable frame and constructed to be capable of moving along the second direction under a driving action of the first movable frame, and
the second pressing assembly is disposed on the second movable frame and constructed to be capable of moving along the second direction under a driving action of the second movable frame.

5. The pressing apparatus according to claim 4, wherein
the first pressing assembly and the second pressing assembly are constructed to be capable of switching between a first pressing mode and a second pressing mode,
in the first pressing mode, one of the first pressing assembly and the second pressing assembly performs a pressing operation, and
in the second pressing mode, both the first pressing assembly and the second pressing assembly perform a pressing operation; wherein
the pressing operation is performed by the first presser of each pressing assembly moving towards the stopper along the first direction.

6. The pressing apparatus according to claim 5, wherein
the pressing apparatus further comprises a controller, wherein the controller is configured to control the first pressing assembly and the second pressing assembly to perform the pressing operation in the first pressing mode or the second pressing mode, based on preset information about an arrangement type of the workpiece queue.

7. The pressing apparatus according to claim 1, wherein
the first presser is provided with a presser head for pushing the workpieces, and
the stopper is provided with an abutting surface for abutting against the workpieces.

8. The pressing apparatus according to claim 4, wherein
the pressing apparatus further comprises a second presser, wherein the second presser is configured to apply an acting force along a third direction to the workpiece queue, and
the second presser is disposed on the first movable frame and/or the second movable frame in a manner of being capable of reciprocating along the third direction, wherein the third direction intersects both the first direction and the second direction.

9. The pressing apparatus according to claim 8, wherein
the second presser is disposed on the first movable frame or the second movable frame through a moving carriage, wherein the moving carriage comprises a third-direction guide rail extending along the third direction, and the second presser is capable of moving along the third-direction guide rail.

10. The pressing apparatus according to claim 9, wherein
the moving carriage is capable of moving along the first direction, and
the moving carriage further comprises at least one moving-carriage slider capable of sliding along the first direction, and the second presser comprises at least one pressing plate, wherein the at least one pressing plate is capable of moving together with the moving-carriage slider.

11. The pressing apparatus according to claim 1 or 8, wherein,
the intersecting comprises perpendicular intersecting.

12. The pressing apparatus according to claim 1, wherein
the placement table is provided with a lifting mechanism for raising and lowering a tray carried by the placement table, and the tray is configured for holding the workpiece queue.

13. The pressing apparatus according to claim 1, wherein
a blocking apparatus is disposed on a side of the placement table in the first direction, and the blocking apparatus is configured to block the tray.

14. The pressing apparatus according to claim 1, wherein
each pressing assembly further comprises a sleeve, and the sleeve is disposed at a position allowing an opening of the sleeve to be fitted over a tray lead screw, wherein the tray lead screw is provided in the tray carried by the placement table and extends from an end of the tray along the first direction.

15. A battery production line comprising a tray conveyor line and the pressing apparatus according to any one of claims 1 to 14, wherein
the tray conveyor line places trays on the placement table or removes trays from the placement table, and
the first presser of the pressing apparatus moves towards the stopper along the first direction to perform a pressing operation on a battery queue carried by the tray on the placement table.

16. The battery production line according to claim 15, wherein
the workpiece comprises at least one of a battery and a battery unit formed by combining at least two batteries, and
the workpiece queue comprises at least one of a battery queue formed by arranging a single row of batteries and a battery unit queue formed by arranging the battery units.

17. A pressing method, wherein a pressing apparatus is configured to press a workpiece queue, the pressing apparatus comprises a placement table and at least one pressing assembly, each pressing assembly comprises a first presser and a stopper arranged opposite the first presser, and each pressing assembly is constructed to be capable of moving along a second direction intersecting a first direction, wherein
the pressing method comprises:
a placing step of placing a tray carrying the workpiece queue on the placement table and bringing the tray to a predetermined position, wherein the workpiece queue comprises a plurality of workpieces arranged in the first direction, and the tray comprises a first vertical plate and a second vertical plate for limiting positions of two ends of the workpiece queue in the first direction;
a positioning step of moving at least one pressing assembly along the second direction to a preparatory pressing position, wherein each pressing assembly comprises the first presser and the stopper, and at the preparatory pressing position, each workpiece queue is located between the first presser and the stopper of the each pressing assembly; and
a pressing step of moving the first presser towards the stopper along the first direction to perform a pressing operation on the workpiece queue until the workpiece queue reaches a predetermined length.

18. The pressing method according to claim 17, wherein
before the positioning step, the pressing method further comprises:
a reading step of reading information about the workpiece queue; and
determining whether the tray contains the workpiece queue, and if the tray does not contain the workpiece queue, removing the tray from the placement table, or if the tray contains the workpiece queue, proceeding to a type determining step.

19. The pressing method according to claim 18, wherein
the pressing assembly comprises a first pressing assembly and a second pressing assembly, and the first pressing assembly and the second pressing assembly are constructed to be capable of switching between a first pressing mode and a second pressing mode,
in the first pressing mode, one of the first pressing assembly and the second pressing assembly performs a pressing operation,
in the second pressing mode, both the first pressing assembly and the second pressing assembly perform a pressing operation, and
in the type determining step, an arrangement type of the workpiece queue is determined based on the read information about the workpiece queue, wherein the arrangement type is used for determining that the pressing operation is performed in the first pressing mode or the second pressing mode.

20. The pressing method according to claim 17, wherein
the pressing apparatus further comprises a second presser configured to apply an acting force along a third direction to the workpiece queue, wherein the third direction intersects the first direction and the second direction, and
after the positioning step and before the pressing step, the pressing method further comprises:
a down-pressing step of moving the second presser along the third direction to press down on the workpiece queue.

21. The pressing method according to claim 19, wherein the placing step comprises:
blocking, using a blocking apparatus, the tray moving along the first direction to place the tray on the placement table; and
raising the placement table using a lifting mechanism of the placement table, so that the placement table disengages from a tray conveyor line that transports the tray, whereby the tray is brought to the predetermined position.

22. The pressing method according to claim 21, wherein the positioning step comprises:
moving the pressing assembly along the second direction to position each workpiece queue between the first presser and the stopper of each pressing assembly based on the arrangement type, wherein if the arrangement type is a double-row workpiece queue, one of the first pressing assembly and the second pressing assembly is moved along the second direction, and if the arrangement type is a single-row workpiece queue, both the first pressing assembly and the second pressing assembly are moved along the second direction;
bringing the first vertical plate of the tray into contact with the stopper, and positioning the tray by having a sleeve of the pressing assembly fitted over a tray lead screw, wherein the tray lead screw is disposed in the tray and extends from an end of the tray along the first direction; and
moving the first presser, which has moved to a position corresponding to the workpiece queue, along the first direction to the vicinity of the second vertical plate of the tray.

23. The pressing method according to claim 22, wherein the pressing step comprises:
moving the first presser towards the stopper along the first direction to perform a pressing operation on the workpiece queue based on the arrangement type, wherein if the arrangement type is a double-row workpiece queue, the first presser of one of the first pressing assembly and the second pressing assembly performs the pressing operation, and if the arrangement type is a single-row workpiece queue, the first pressers of both the first pressing assembly and the second pressing assembly perform the pressing operation; and
determining whether each pressed workpiece queue has the predetermined length; and if every workpiece queue has the predetermined length, proceeding to a locking step, if any workpiece queue is longer than the predetermined length, making the first presser corresponding to that workpiece queue continue pressing until the workpiece queue reaches the predetermined length, and if any workpiece queue is shorter than the predetermined length, determining that the workpiece queue is unqualified under pressing criteria; wherein
in the locking step, the sleeve fitted over the tray lead screw is rotated to be locked, thereby preventing the second vertical plate from moving away from the first vertical plate along the first direction, so as to maintain the workpiece queue at the predetermined length.
